(19) **Europäisches Patentamt**
**European Patent Office**
**Office européen des brevets**

(11) **EP 1 903 409 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(51) Int Cl.:
**G05B 19/4093** (2006.01)

(21) Anmeldenummer: **07405098.0**

(22) Anmeldetag: **21.03.2007**

(54) **Methodenplanung**

Methodology planning

Plan de méthodes

(84) Benannte Vertragsstaaten:
**DE FR GB**

(30) Priorität: **23.03.2006 CH 4512006**

(43) Veröffentlichungstag der Anmeldung:
**26.03.2008 Patentblatt 2008/13**

(60) Teilanmeldung:
**11005934.2 / 2 442 194**

(73) Patentinhaber: **Autoform Engineering GmbH**
**8173 Neerach (CH)**

(72) Erfinder:
• **Pietsch, Matthias**
**8002 Zürich (CH)**

• **Wagner, Silke**
**8032 Zürich (CH)**
• **Lefebvre, Nicolas**
**8052 Zürich (CH)**
• **Kubli, Waldemar**
**8173 Neerach (CH)**

(74) Vertreter: **Frei Patent Attorneys**
**Frei Patentanwaltsbüro AG**
**Postfach 1771**
**8032 Zürich (CH)**

(56) Entgegenhaltungen:
**WO-A-2004/102291 WO-A-2005/024671**
**WO-A-2005/103850**

EP 1 903 409 B1

## Beschreibung

Die vorliegende Erfindung liegt im Bereich der Bestimmung und Optimierung von Bearbeitungsschritten bei der Herstellung von Blechumformteilen, beispielsweise mittels Tief-/Streckziehprozesse. Sie bezieht sich auf ein Verfahren, ein Datenverarbeitungssystem, ein Computerprogramm und einen Datenträger zur computergestützten Generierung von Werkzeugparametern für Werkzeuge zur Herstellung von Umformblechteilen durch Umformprozesse gemäss dem Oberbegriff der entsprechenden unabhängigen Patentansprüche.

## STAND DER TECHNIK

Blechumformteile werden in der Regel durch Tief-/Streckziehen hergestellt. Das Halbzeug, die sogenannten Blechplatinen (Platinen), werden zu diesem Zweck in mehrteilige Umformwerkzeuge gelegt. Mittels Pressen, in denen die Umformwerkzeuge eingespannt sind, werden die Teile geformt. Die Teile werden in der Regel über mehrere Umformstufen durch Bearbeitungsschritte oder Fertigungsschritte wie Ziehen, Nachschlagen, Einstellen, etc., kombiniert mit Beschneidschritten, aus einer flachen Blechplatine hergestellt.

Bei der Entwicklung des Methodenplanes werden Umformoperationen und ihre Inhalte, das heisst, was in welcher Operation geformt oder geschnitten wird, sowie Beschreibungen von Werkzeugen, die zur Herstellung dieses Bauteils benötigt werden, ermittelt. Dabei wird vom fertig konstruierten Bauteil ausgegangen, und heute üblicherweise wie folgt vorgegangen:

Es gibt Ansätze mit unterschiedlichem Detaillierungsgrad:

- Die Grobmethode steht häufig am Beginn des Planungsprozesses, beispielsweise um eine Grundlage für eine Angebotskalkulation zu haben. Hierbei wird die Operationenfolge festgelegt, d.h. es wird für jede Operation bestimmt, welche Bauteilbereiche dort auf welche Weise bearbeitet werden sollen. Meist sind die "Nebenbedingungen", wie z.B. die Presse, zu diesem Zeitpunkt noch nicht bekannt.
- Die Feinmethode entsteht zu einem wesentlich späteren Zeitpunkt als die Grobmethode. Aufgrund der dann verfügbaren größeren "Informationsbasis" fällt diese wesentlich detaillierter als die Grobmethode aus. So enthält sie z.B. die genaue Schnittkontur für den Platinenschnitt, Besonderheiten der Ziehoperation (Ziehsicken etc.), die Schwenklage in jeder Operation und genaue Arbeitsrichtungen der Schieber. Sie dient als Input für die Werkzeugkonstruktion.

Bisher spielt bei der manuellen Erzeugung durch einen Methodenplaner die Erfahrung eine große Rolle: die Festlegung der Methode erfolgt meist anhand bereits erstellter Methoden für Bauteile gleichen Typs, entweder indirekt durch Wiederverwendung des gewonnenen Wissens oder direkt durch Abänderung einer bereits bestehenden Methode für ein ähnliches Bauteil. Im Lauf der Zeit "lernt" der Methodenplaner

- mit welchen Abfolgen von Bearbeitungsschritten sich bestimmte Teilgeometrien, wie z.B. L- oder Z-Flansche, realisieren lassen;
- welche "Kombination" aus Bauteilbereichen und Bearbeitungsschritten sich in einer Operation realisieren läßt bzw. bevorzugt in einer Operation zusammen gefertigt werden sollte (z.B. kann bei einer Seitenwand "Abkanten Dachkanal" und "Abkanten A-Säule oben" oft gut in einer Operation realisiert werden);
- welche "Kombination" aus Bauteilbereichen und Bearbeitungsschritten sich nicht oder nur schlecht in einer Operation realisieren läßt (z.B. lässt sich bei einer Seitenwand "Nachformen Dachkanal" und "Nachformen A-Säule oben" oft nicht zusammen in einer Operation realisieren, da nicht genug Platz für alle Schieber ist).

Für die visuelle Darstellung der Grobmethode wird in der Regel auf 2D-screenshots des Bauteils zurückgegriffen, wobei die Methode dann meist mit Hilfe einfacher Richtlinien erstellt wird, wie zum Beispiel

- für jede Operation gibt es ein Bild
- für jede Bearbeitungsart (Schneiden, Abkanten,...) gibt es eine Farbe.

In der Methode werden dann die in der jeweiligen Operation bearbeiteten Bauteilbereiche mit den entsprechenden Farben markiert. Es gibt auch die Variante mit nur einem Bild, in dem dann jede Farbe einer Operation entspricht.

Diese Vorgehensweise bei der Grobmethoden-Erstellung bringt viele Nachteile mit sich:

- Der Planer fängt bei jedem neuen Bauteil wieder "von vorne" an und baut die Methode von Grund auf neu auf; auch bei Zuhilfenahme alter Methodenpläne muss für jeden Schritt geprüft werden, ob er sich ohne weiteres auf das neue Bauteil bzw. Werkzeug übertragen lässt und die Methode für das neue Bauteil wird von Hand neu erstellt. Dies macht den Vorgang unnötig zeitaufwändig und teuer.

- Da die gefundenen Lösungen zu einem großen Teil auf der Erfahrung des jeweiligen Planers beruhen, sind sie für andere teilweise nur schwer nachvollziehbar.
- Auch die Vergleichbarkeit und Wiederverwendbarkeit verschiedener Lösungen leidet unter den unterschiedlichen Herangehensweisen der einzelnen Planer und dem Fehlen von unternehmensspezifischen Standards.
- Die unzureichende Verwendung der 3D-Geometrie führt zu vermeidbaren Ungenauigkeiten und daraus resultierender Fehleranfälligkeit der Methode; so kann es passieren, dass potentielle Problemstellen in der Geometrie übersehen und Parameter abgeschätzt werden, die auch genau berechnet werden könnten (wie z.B. die Schwenklage).
- Wenn keine 3D-Geometrie verwendet wird, so gibt es auch nicht die Möglichkeit, den Methodenplan über eine Simulation abzusichern.
- Es gibt keine standardisierten Dokumente zur Kommunikation der Methode an Zulieferer bzw. an Auftraggeber.

Auf Basis der Grobmethode entstehen erste Kostenabschätzungen für die Werkzeug-Invest-Kosten und auch Angebotskalkulationen. Auch hier spielt die Erfahrung des Kalkulators eine große Rolle, insbesondere bei der Aufwandsabschätzung, weswegen sich ähnliche Probleme wie bei der Grobmethoden-Erstellung identifizieren lassen:

- Die Kalkulationen sind nicht reproduzierbar; unterschiedliche Kalkulatoren kommen zu unterschiedlichen Ergebnissen und selbst der gleiche Kalkulator kann zu zwei unterschiedlichen Ergebnissen für ein und dasselbe Werkzeug kommen, da die Kalkulation seiner persönlichen Einschätzung unterliegt.
- Bei jeder Kostenkalkulation beginnt der Kalkulator "von vorn".
- Die schlechte Vergleichbarkeit der Grobmethoden selbst in Kombination mit der subjektiven Bewertung durch den Kalkulator bedeuten ein hohes Planungsrisiko: es ist nicht möglich, verschiedene Methoden und deren Kosten nach objektiven Maßstäben zu beurteilen und zu vergleichen, um die beste auszuwählen.
- Selbst auf verschiedene (subjektive) Methoden und deren Bewertungen kann oft nicht als Planungshilfe zurückgegriffen werden, da die Erstellung und Kalkulation viel zu zeitaufwändig ist. Insbesondere bei Zulieferern, die innerhalb kürzester Zeit ein Angebot für einen oder auch mehrere Werkzeugsätze abgeben müssen, ist die Zeit ein sehr kritscher Faktor (teilweise ist die Zeit so knapp, dass sie nicht einmal für die Erstellung einer einzigen Methode (nach dem bisherigen Verfahren) reicht; ein Angebotspreis wird dann beispielsweise dadurch gefunden, dass jeder Planer bzw. Kalkulator eine ihm angemessen erscheinende Zahl sagt und daraus der Mittelwert genommen wird).
- Die Kalkulation der Zulieferer ist für Auftraggeber nicht ausreichend transparent, Änderungskalkulationen sind in der Regel nicht nachvollziehbar.

Es ist für eine Angebotskalkulation zu aufwändig, eine im Vergleich zur Grobmethode wesentlich detailliertere Darstellung der erforderlichen Bearbeitungsschritte und -Werkzeuge zu erstellen, oder sogar einen vollständigen Methodenplar zu erstellen, und daraus die Kosten abzuschätzen.

WO 2005/103850 offenbart ein Verfahren zur Bestimmung von Prozess-Operationen bei Umformprozessen aufgrund von Geometriemodellen, welche durch Geometrie-Operatern zur Beschreibung von Bearbeitungsoperationen miteinander verknüpft sind.

## DARSTELLUNG DER ERFINDUNG

Es werden die folgenden Begriffe verwendet: Bauteile werden mittels Umformpressen geformt, welche auch als Pressenstrasse bezeichnet werden können, und mehrere einzelne Stationen oder "Einzelpressen" umfassen können. Im Fall von geverbundwerkzeugen sind die einzelnen Stationen in einem Werkzeug realisiert. Die Vorgänge in einer einzelnen Station werden als Operation bezeichnet. Vom Bauteil aus betrachtet wird ein Merkmal durch eine Fertigungsfolge von einzelnen Fertigungsschritten gefertigt. Diejenigen Fertigungsschritte für ein Merkmal, die in derselben Station respektive Operation durchgeführt werden, bilden eine Bearbeitungseinheit, im Folgenden "Modul" genannt.

Es ist Aufgabe der Erfindung, ein Verfahren, ein Datenverarbeitungssystem, ein Computerprogramm und einen Datenträger zur computergestützten Generierung von Werkzeugparametern für Werkzeuge zur Herstellung von Umformblechteilen durch Umformprozesse der eingangs genannten Art zu schaffen, welche die oben genannten Nachteile behebt, und insbesondere erlaubt, eine detaillierte Repräsentation des Herstellungsprozesses zu generieren.

Diese Aufgabe wird gelöst gemäss den Gegenständen der entsprechenden unabhängigen Patentansprüche.

Das Verfahren zur computergestützten Generierung von Werkzeugparametern für Werkzeuge zur Herstellung von Umformblechteilen durch Umformprozesse, wobei eine Repräsentation eines Herstellungsprozesses erzeugt wird, welche einen Satz von Bearbeitungsschritten oder Fertigungsschritten und geometrische Parameter dieser Bearbeitungsschritte enthält, weist die Schritte gemäss Patentanspruch 1 auf.

Dieses Verfahren erlaubt eine teilweise oder ganz automatisierte Bestimmung der Komponentenparameter, wodurch der Engineeringaufwand massiv reduziert wird.

Weitere Komponentenparameter, nebst der Werkzeuggeometrie, sind beispielsweise das Grundmaterial, das Härteverfahren (für gewisse Komponenten), Material des Bauteils oder Bauraum in der Presse.

Das Verfahren weist insbesondere die Schritte auf:

- Bestimmen, für jede der Komponenten, von Komponentenkosten aus den Komponentenparametern, wobei die Komponentenkosten die von der entsprechenden Komponente respektive den entsprechenden Werkzeugen verursachten Bearbeitungs- und Materialkosten repräsentieren;
- Bestimmen von Gesamtkosten als Summe der Komponentenkosten.

Damit ist es möglich, die Kosten ausgehend von einem detaillierten Bearbeitungsmodell weitgehend automatisch zu bestimmen. Dadurch ist eine bisher nicht vorhandene Genauigkeit und Objektivität der Kostenschätzung mit vergleichsweise geringem Arbeitsaufwand möglich.

Das Verfahren weist insbesondere den Schritt auf:

- Bestimmen eines Methodenplanes, wobei ein Methodenplan eine geordnete Folge von Fertigungsschritten und die geometrischen Parameter dieser Fertigungsschritte enthält, durch Zuordnen jedes der Module zu einer Umformoperation, unter Berücksichtigung von Randbedingungen, welche die Zuordnung jeweils eines Moduls beispielsweise in Abhängigkeit der Zuordnungen von anderen Modulen und von anderen Randbedingungen einschränkt.

Damit ist es möglich, einen Methodenplan vollständig oder weitgehend automatisch zu bestimmen. Die Benutzerinteraktionen bei einer nicht vollständig automatischen Durchführung betreffen in der Regel Design-Entscheide, also keine fundamentalen Verfahrensschritte. Grundsätzlich können für solche Entscheide jeweils im Voraus bevorzugte Varianten festgelegt werden. Dann kann das Verfahren vollständig automatisch ablaufen.

In einer bevorzugten Ausführungsform der Erfindung weist das Verfahren als modifizierbaren Parameter mindestens einen auf von

- Zuordnung unterschiedlicher Schwenklagen zu den Operationen;
- Zuordnung unterschiedlicher Methodenstandards zu einem Geometriemerkmal;
- Zuordnung unterschiedlicher Varianten einer Komponente zu einem Modul;
- Zuordnung von Modulen zu Operationen;
- Unterschiedliches Zusammenfassen von Komponenten; beispielsweise können Löcher evtl. auf unterschiedliche Weisen zu Lochgruppen, die sich jeweils einen Schieber teilen, zusammengefasst werden.

Die iterative Modifikation und Neuberechnung der Kosten geschieht solange, bis ein vorgegebenes Abbruchkriterium des Optimierungsverfahrens erfüllt ist.

Die verschiedenen oben erwähnten Schritte werden im Folgenden allgemein erläutert.

**Bestimmung der Schwenklage**

In einer bevorzugten Ausführungsform der Erfindung wird mindestens eine Schwenklage des Bauteils bestimmt, also eine Orientierung bezüglich der Hauptarbeitsrichtung der jeweiligen Presse. Die Schwenklage oder auch Bauteillage ist so einzustellen, dass folgende Forderungen möglichst gut erfüllt werden:

- Kein oder wenig Hinterschnitt, das heisst, dass möglichst viele Bereiche aus Arbeitsrichtung umgeformt werden können.
- Gleichmässige Ziehtiefe, um während des Ziehens einen mittigen Angriffspunkt und eine gleichmässige Streckung des Materials zu bewirken.

Die Bestimmung der Schwenklage kann grundsätzlich rein manuell, vollständig automatisch oder halbautomatisch, das heisst mit Benutzerinteraktion, implementiert sein. Im einfachsten Fall werden die beiden Winkel, welche die Schwenklage definieren, durch einen Bediener manuell vorgegeben.

**Feature-Erkennung**

Bereiche am Bauteil, die nach dem Tiefziehen in weiteren Operationen bearbeitet werden müssen, haben geometrische Eigenschaften, welche sie vom Rest der Geometrie unterscheiden, sodass sie zu einem großen Teil automatisch erkannt werden können. Solche Bereiche, im weiteren "Features" oder "Geometriemerkmale" genannt, sind vorzugsweise von einem der folgenden Merkmalstypen:

- Löcher

- Durchbrüche

- Durchstellungen

- Hinterschnittige Bereiche

- Flansche

- Nachformbereiche

- Randbereiche

Die Feature-Erkennung kann grundsätzlich rein manuell, vollständig automatisch oder halbautomatisch, das heisst mit Benutzerinteraktion, implementiert sein. Mittels Geometrieanalyse-Algorithmen, die das Bauteil gezielt nach Bereichen mit den entsprechenden Eigenschaften (z.B. Bereiche am Rand, die vom Rest durch einen kleinen Radius getrennt sind) absuchen, kann ein großer Teil dieser Features erkannt werden. Für nicht erkannte Features können einfache Mechanismen das Selektieren solcher Bereiche erleichtern: ausgehend von einem vom Benutzer angeklickten Patch (oder einer Kurve) wird gezielt nach einem Feature gesucht, das diesen Patch enthält.

Die so extrahierten Features werden durch ihre Merkmalstypen und durch ihre Geometrie, das heisst ihre geometrische Form beschrieben. Die Geometrie kann durch ein Polyedermodell repräsentiert sein, oder durch ein parametrisches Modell. In einem parametrischen Modell wird eine Fläche oder ein Körper durch einfache geometrische Elemente oder Körper und deren Parameter beschrieben. Beispielsweise kann eine dreidimensionale Fläche durch das Verschieben einer zweidimensionalen Kurve (generatrix) entlang einer Kurve (directrix) im Raum definiert sein.

Bei einem Polyedermodell können die Koordinaten der Netzpunkte als Modellparameter betrachtet werden.

## Methodenstandards

Für jedes Feature gibt es mehrere Kombinationen von Fertigungsschritten, mit welchen sie realisiert werden können. So wird z.B. ein einfacher L-Flansch in der Regel dadurch gefertigt, dass er entweder zuerst geschnitten und dann abgekantet wird oder umgekehrt. Ein weiteres Beispiel ist eine Durchstellung, die in der Regel geschnitten und dann durchgestellt wird. Eine solche mögliche Kombination von Fertigungsschritten wird im Folgenden "Methodenstandard" genannt.

Die Methodenstandards sind modular aufgebaut: für jedes Feature entspricht alles, was innerhalb einer Operation an diesem Feature umgesetzt wird, einem Modul. So besteht beispielsweise der Methodenstandard "schneiden + durchstellen" (für die Realisierung einer Durchstellung) aus den beiden Modulen "schneiden" und "durchstellen", der Methodenstandard "schneiden + durchstellen in einem Zug" hingegen besteht nur aus einem Modul, da das Schneiden und das Durchstellen in der gleichen Operation erfolgen.

Der modulare Aufbau ermöglicht es dem Benutzer, vordefinierte Module miteinander zu kombinieren und sich auf diese Weise seine eigenen (unternehmensspezifischen) Methodenstandards zu kreieren. Je nach Unternehmen oder je nach Qualitätsklasse werden unterschiedliche Methodenstandards zur Realisierung eines Features gewählt.

## Komponenten-Daten

Um eine Grundlage für eine Kostenbecechnung zu haben, werden zu den Modulen die Teile der Werkzeuge beschrieben, die zur Realisierung des Modules erforderlich sind. Diese Teile werden im folgenden "Komponenten" genannt und in der folgenden Weise automatisch ermittelt:

1. Für ein Modul werden in der Regel immer die gleichen Arten von Komponenten benötigt (z.B. braucht man für den Beschnitt eines Flansches in der Regel Ober- und Untermesser, für das Schneiden eines Durchbruchs in der Regel Schneidstempel, Schneidmatrize, Stempelhalteplatte und Abstreiferplatte). Diese Komponenten werden im Folgenden Modul-Komponenten genannt. Eine Modul-Komponente beinhaltet nicht die konkrete Ausprägung der Komponente, wie z.B. Länge, Breite, Material etc. Die konkrete Ausprägung einer Modul-Komponente wird im Folgenden Werkzeug-Komponente genannt. Hinterlegt man für jedes Modul die benötigten Modul-Komponenten, so können sie bei Verwendung des Moduls automatisch hinzugefügt werden.

2. Jedes Feature ist eine Sammlung von Parametern, die es beschreiben (wie z.B. Länge, Breite, Volumen,...). Analog kann man jede Werkzeug-Komponente über ihre wichtigsten Parameter beschreiben. Um nun von den aus 1. bekannten Modul-Komponenten mit Hilfe des Features zu den konkreten Werkzeug-Komponenten zu gelangen, sind Berechnungsvorschriften oder Abbildungen von den Feature-Parametern auf die Komponentenparameter hinterlegt. Jeder Komponentenparameter (wobei vorzugsweise nur die für die Kosten relevanten erfasst werden) wird also mit Hilfe der Feature-Parameter mit einem Wert belegt (z.B. Durchmesser des Lochstempels = Durchmesser des Lochs). Einen Sonderfall bilden Messer, Backen und Segmente: hier kann der Benutzer die bei ihm übliche Standardlänge vorgeben (in der Regel 300 - 400mm). Für Messer wird dann die Beschnittlänge durch die Standardlänge geteilt um zur richtigen Anzahl Messer für die Kalkulation zu gelangen (bleibt bei der Division ein hinreichend großer Rest, so wird zusätzlich ein Messer mit der Länge des Restes in die Kalkulation mitaufgenommen, ist der Rest klein, so wird eines der anderen Messer vergrößert"). Bei Backen und Segmenten wird analog vorgegangen.

3. Jede Werkzeug-Komponente verursacht - abhängig von der Ausprägung ihrer Parameter - einen gewissen Aufwand in einzelnen Prozess-Schritten des Entstehungsprozesses eines Werkzeugs. Am Beispiel Backe sieht das folgendermassen aus: die wesentlichen Parameter sind Länge, Breite, Höhe, Material (Guss/Halbzeug) und Härteverfahren (vergütet / durchgehärtet / lasergehärtet / induktionsgehärtet). Eine Backe z.B. verursacht Arbeitsaufwand beim Fräsen und Bohren des Groß-Gusses (Fräsen der Taschen), beim Fräsen und Bohren der Backe selbst, bei der Vormontage, beim Härten, beim Tuschieren und bei der endgültigen Montage (Tuschieren der Stöße und Anlageflächen). Außerdem verursacht sie einen gewissen Materialverbrauch.

Mit Hilfe von gespeicherten Daten aus der Praxis, die den Aufwand bzw. Materialverbrauch, im Folgenden Ressourcenverbrauch genannt, für verschiedene Parameterausprägungen der Komponenten beinhalten, lassen sich mittels Regression Abbildungsfunktionen von den Parameterwerten auf den Ressourcenverbrauch ermitteln. All diese Funktionen sind in einer Datenbank hinterlegt, so dass für jede automatisch generierte Komponente mittels ihrer Parameterwerte die passenden Verbrauchsfunktionen aus der Datenbank ausgewählt und ausgewertet werden können.

**Grundaufbau**

Im vorigen Abschnitt wurde erläutert, wie alle von den Modulen benötigten Komponenten automatisch in der richtigen Größe erzeugt und der von ihnen verursachte Ressourcenverbrauch berechnet werden kann. Für eine vollständige Kostenkalkulation benötigt man zusätzlich alle Komponenten im Werkzeug, die nicht für die Realisierung eines bestimmten Features benötigt werden, den sogenannten Grundaufbau. Hierfür sind alle potentiell in einem Grundaufbau vorkommenden Komponenten - analog zu den anderen Komponenten - mit ihren wichtigsten Parametern und den davon abhängigen Verbrauchsfunktionen in einer Datenbank hinterlegt. Diese werden nun zu verschiedenen Grundaufbau-Paketen kombiniert, aus denen der Benutzer sich eines aussuchen kann (beim Tiefziehwerkzeug gibt es beispielsweise die Gundaufbauten "doppeltwirkend", "einfachwirkend mit Gusswanne" und "einfachwirkend mit Grundplatte (aus Stahl)"). Der Benutzer kann sich auch eigene Pakete zusammenstellen. Die Bestimmung der Parameterwerte für die Grundaufbau-Komponenten erfolgt analog zu den anderen Komponenten mit dem Unterschied, dass in diesem Fall keine Feature-Parameter einfliessen, sondern Werte, die durch das Bauteil als Ganzes bestimmt sind (Länge, Breite, etc.).

**Gemeinsame Komponenten**

Es kommt vor, dass sich Module eine oder mehrere Komponenten teilen, z.B. bei nicht in Pressenarbeitsrichtung fertigbaren Löchern, die über den gleichen Schieber realisiert werden. Gemeinsame Komponenten können über einen Vergleich der berechneten, bevorzugten Arbeitsrichtungen automatisch bestimmt werden. Beispielsweise werden

- nahe beieinander liegende Löcher, die aus der gleichen Arbeitsrichtung gefertigt werden, innerhalb einer gewissen Toleranz, zu einer Lochgruppe zusammengefasst, die sich gewisse Komponenten teilen (z.B. eine Stempelhalteplatte).
- analog Lochgruppen bestimmt, die über den gleichen Lochschieber realisiert werden können.
- benachbarte Features, die in einem Modul einen Füllschieber benötigen, sich diesen bei gleicher Arbeitsrichtung als gemeinsame Komponente teilen.

Der Benutzer kann auch bei der Grobmethoden-Erstellung eingreifen, die zu den Modulen gehörigen Komponenten anzeigen lassen und gemeinsame Komponenten manuell definieren. Die Komponente wird dann nur einmal erzeugt, wobei die Berechnung ihrer Parameterwerte den Gegebenheiten angepasst wird. Der Lochschieber wird bspw.

entsprechend vergrößert.

## Constraints

Um auch die Erstellung der Grobmethode weitestgehend zu automatisieren, werden sogenannte "Constraints" festgelegt. Diese sind Randbedingungen, welche die Verteilung der Module auf die Operationen steuern sollen. Es gibt drei verschiedene Arten von Constraints:

- Constraints bezüglich Reihenfolge: Modul A muss vor/nach Modul B gefertigt werden
- Constraints bezüglich Gleichzeitigkeit / Ausschluss: Modul A und B müssen / dürfen nicht in der gleichen Operation gefertigt werden.
- Constraints bezüglich Operationstypen: Modul A darf nicht in Operationen vom Typ x (z.B. Platinenschnitt) gefertigt werden.

Viele Constraints lassen sich aus den Methodenstandards und den Komponenten ableiten:

- Die Reihenfolge der Module innerhalb eines Methodenstandards ist zwingend, d.h. auch im Methodenplan müssen sie in dieser Reihenfolge erscheinen.
- Haben zwei Module eine gemeinsame Komponente, so müssen sie in der gleichen Operation gefertigt werden.
- Für die meisten Module lassen sich Operationstypen ausschliessen, in denen sie nicht vorkommen dürfen (z.B. kann Abkanten nicht mit einem Platinenschneid-, Zieh- oder Schneidwerkzeug geschehen).

Des weiteren kann man geometrische Constraints bestimmen, indem man die geometrischen Abmessungen der Komponenten, bzw. den Raum, den die Komponente bei ihrer Arbeit einnimmt, berücksichtigt: ist zu wenig Platz für die Komponenten von Modulen benachbarter Features, so müssen sie verschiedenen Operationen zugeordnet werden.
Constraints können also verschiedenen Ursprungs sein: sie können vorgegeben sein durch allgemeine, immer gültige Regeln, oder entsprechend den effektiv verwendeten Methodenstandards, oder aufgrund der effektiven Teilegeometrie und damit der Werkzeuggeometrie.
Zusätzlich zu diesen "harten" Constraints, die auf jeden Fall eingehalten werden müssen, kann man "weiche" Constraints definieren, welche nach Möglichkeit erfüllt werden sollten, die aber nicht zwingend sind. Beispiele sind bevorzugte "Zeitpunkte" für bestimmte Module (z.B. Lochen soll immer in der letzten Operation / immer direkt nach dem Tiefziehen geschehen), oder das gemeinsame Fertigen zweier Module in einer Operation, wenn gewisse Nebenbedingungen erfüllt sind (z.B. Flansche, deren Abstand kleiner als ein gewisser Grenzwert x ist, sollen nach Möglichkeit zusammen abgekantet werden). Auch der Benutzer hat die Möglichkeit, weitere harte und weiche Constraints festzulegen.

## Optimierung

Ziel der Planer ist es, einen Methodenplan zu finden, der möglichst kostengünstig realisiert werden kann. Prinzipiell hat eine eingesparte Operation ein hohes Einsparungspotential. Diese Einsparung muss in der Regel durch eine aufwändigere Schieberkonstruktion in einer der verbleibenden Operationen erkauft werden. Unter Verwendung der im vorigen Abschnitt erläuterten Constraints kann hier mittels kombinatorischer Optimierungsverfahren eine Operationsanzahl und eine Verteilung der Module auf die Operationen gefunden werden, welche die Kosten minimiert.
Ein solches Optimierungsverfahren wird durch Berücksichtigung anderer Einflussparameter sukzessive verfeinert:

- Berücksichtigung verschiedener (zulässiger) Varianten einer Komponente (z.B. Geber-Nehmer-System anstatt Standard-Norm-Schieber).
- Berücksichtigung verschiedener (zulässiger) Methodenstandards.
- Zusammenlegung von Komponenten.

Als weiterer Schritt geschieht vorzugsweise eine

- Berücksichtigung verschiedener Schwenklagen in den einzelnen Operationen. Ändert man die Schwenklage, so können eventuell gewisse Features, für die bisher ein Schieber benötigt wurde, aus Pressenarbeitsrichtung bearbeitet werden und somit die Schieber eingespart werden. Jedoch wird dann eventuell für andere Features ein Schieber zusätzlich benötigt, sofern das entsprechende Modul nicht in eine andere Operation mit einer günstigeren Schwenklage verschoben werden kann.

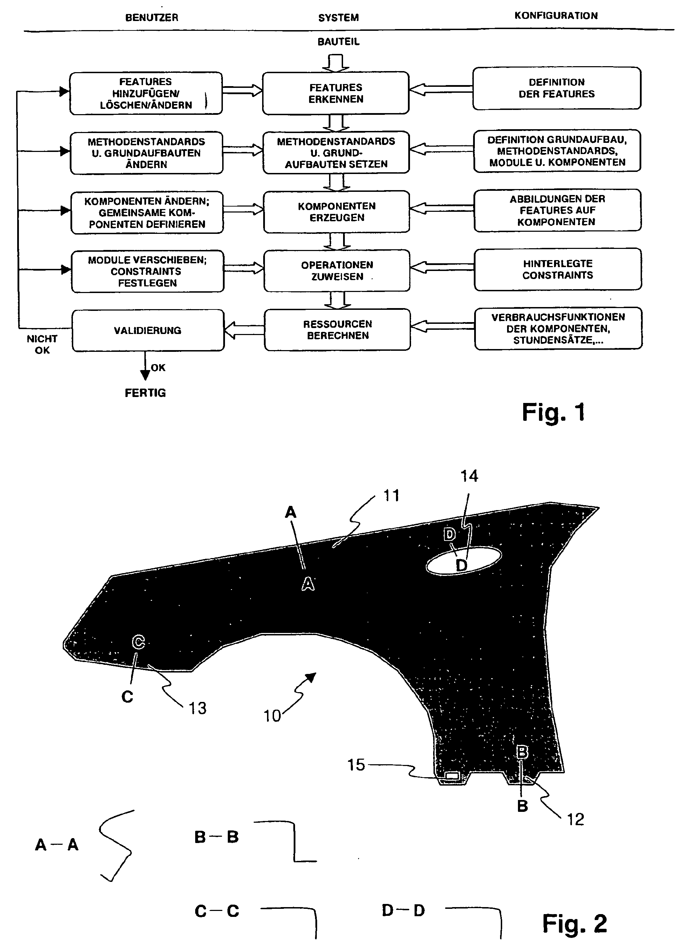

Fügt man die aufeinander aufbauenden Ideen der bisherigen Abschnitte zusammen, so ergibt sich daraus ein Gesamtkonzept zur halbautomatischen Erstellung eines Methodenplans und einer daraus resultierenden vollautomatischen Kostenkalkulation. Dies ist übersichtsmässig in Figur 1 dargestellt:

Für jeden Schritt berechnet das System ausgehend von der 3D-Bauteilgeometrie einen Vorschlag (mittlere Spalte). Der Benutzer kann die Funktionsweise des Systems vor der Anwendung auf ein bestimmtes Bauteil konfigurieren, das heisst, an seine Gegebenheiten anpassen, indem er die Konfiguration verändert (rechte Spalte).

Diese Konfigurationsmöglichkeit umfasst

- Definitionen der Features (z.B. ab welchem Umfang soll ein Loch als Durchbruch gelten).
- Anlegen neuer Komponenten (bzw. Modifikation der bestehenden).
- Anlegen neuer Module (bzw. Modifikation der bestehenden).
- Zusammenstellen neuer Methodenstandards (bzw. Modifikation der bestehenden).
- Zusammenstellen neuer Grundaufbauten (bzw. Modifikation der bestehenden).
- Ändern gewisser Abbildungsparameter (z.B. Standard-Messerlänge).
- Anlegen neuer Ressourcenverbrauchs-Funktionen für die einzelnen Komponenten (bzw. Modifikation der bestehenden).
- Anpassen der Stundensätze und Materialkostensätze.

Somit können sämtliche wichtigen unternehmensspezifischen Gegebenheiten bei der Berechnung berücksichtigt werden.

Bei der Verwendung des Systems hat der Benutzer zu jedem Zeitpunkt die Möglichkeit, zu interagieren und den berechneten Vorschlag seinen Wünschen entsprechend abzuändern (linke Spalte). Er kann

- Features umdefinieren (z.B. weil ein Flansch wie ein Nachformbereich am Rand behandelt werden soll oder ein Loch wie ein Durchbruch, weil es dafür keinen Standard-Lochstempel gibt).
- einen anderen Methodenstandard für ein Feature auswählen.
- einen anderen Grundaufbau für ein Werkzeug auswählen.
- gemeinsame Komponenten definieren (siehe oben).
- eine andere Variante einer Komponenten wählen.
- Module in andere Operationen verschieben (soweit dadurch kein Constraint verletzt wird).
- zusätzliche Constraints definieren.

## Kalibrierung

Die Ressourcen-Verbrauchsfunktionen bilden die Einflussgrössen auf den Ressourcenverbrauch ab. Wurden während der Werkzeuganfertigung die benötigten Ressourcen (Zeiten für die Herstellung und Montage von Werkzeugkomponenten, Materialverbrauch) ermittelt, so können diese zusammen mit den Einflussgrössen in eine Erfahrungsdatenbank integriert werden.

Mittels Ausgleichsrechnung können, davon ausgehend, die Parameter der Verbrauchsfunktionen neu bestimmt werden. Somit schärft sich die Kalkulation mit zunehmender Anzahl an gefertigten Werkzeugen und hat auch die Möglichkeit sich an Änderungen von Abläufen oder Produktivitätssteigerungen anzupassen.

Das vorgestellte Verfahren strukturiert den Methodenplan in der Art, dass er während des gesamten Planungsprozesses durchgängig ausgebaut und, z.B. durch Einbau der Wirkflächen für die Umformwerkzeuge oder durch Hinterlegung der Volumenmodelle der Komponenten, verfeinert werden kann. Der strukturierte Methodenplan kann insbesondere für die Kommunikation mit Zulieferern verwendet werden, um mehr Informationen zu Bauteil (Features), Methoden und Kosten auszutauschen oder Änderungsvorschläge und damit verbundene Kosten plausibel zu machen bzw. auf anderer Seite nachzuvollziehen.

Die Ergebnisse aller Planungsschritte sind immer sichtbar. Redundante Arbeit, und damit zusammenhängend inkonsistente Planungsstände, werden vermieden. Weite Teile der Planung sind automatisierbar. Kritische Bauteile können in frühen Phasen detaillierter untersucht werden. Die Kostenkalkulation ist erheblich schneller und effizienter. Je nach Reifegrad enthält der Methodenplan alle Daten, um Kostenanalyse, Prozesssimulation, Kinematik- und Kollisionsanalyse oder eine Analyse des dynamischen Verhaltens des Werkzeuges anzusteuern. Diese Analysen werden zu verschiedenen Zeitpunkten zur Erhöhung der Planungssicherheit eingesetzt.

Anders als bisher werden die Kosten von dem im Methodenplan hinterlegten Prozess und den exakten Produktdaten abgeleitet. Die Kosten spiegeln immer den aktuellen Planungsstand wieder. Die Kalkulation ist objektiv, vergleichbar, reproduzierbar und nachvollziehbar. Die Verbrauchsfunktionen, welche die Einflussgrössen auf Ressourcenverbrauche in den Schritten zur Anfertigung des Werkzeuges abbilden, sind ebenso konfigurierbar wie die Kostensätze.

Das Datenverarbeitungssystem zur computergestützten Generierung von Werkzeugparametern für Werkzeuge zur Herstellung von Umformblechteilen durch Umformprozesse weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zur computergestützten Generierung von Werkzeugparametem für Werkzeuge zur Herstellung von Umformblechteilen durch Umformprozesse ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor.

## KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:

Figur 1    eine Übersicht über das Verfahren;
Figur 2    ein Blechbauteil;
Figur 3    eine Struktur der Daten zur Modellierung einer Folge von Umformschritten;
Figur 4    eine Liste von Featuretypen zugeordneten Methodenstandards;
Figur 5    eine Liste von Featuretypen und Modultypen mit zugeordneten Modul-Komponenten;
Figur 6    eine Liste von Modul-Komponenten mit zugeordneten konkreten Komponenten;
Figur 7    eine Liste von Komponenten mit zugeordneten Auswahlgrössen; und
Figur 8    eine Liste von Komponenten mit zugeordneten Aufwandsfunktionen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## WEGE ZUR AUSFÜHRUNG DER ERFINDUNG

Die **Figur 2** zeigt schematisch ein Blechbauteil. Das Bauteil ist ein Vorderteil einer Autokarosserie, mit einem Wasserkanal (Typ: Hinterschnittige Nachformung) entlang der Kante 11, einer Schwelleranbindung 12 (Typ: Nachformung), einer Stossfängeranbindung 13 (Typ: Flansch), einem Loch 14 für einen Blinker (Typ: Durchstellung) und einem Loch 15 in der Schwelleranbindung (Typ: Rechteckloch). Die Schnitte A-A bis D-D zeigen schematisch Querschnitte in diesen Bereichen. Die oben angegebenen Typen sind die jeweiligen Merkmalstypen oder Featuretypen.

Im Folgenden werden zuerst beispielhaft die automatisch ermittelten Modelldaten zu diesem Bauteil beschrieben, anschliessend werden die zugrundeliegenden Zusammenhänge und Datenstrukturen ausführlicher erläutert.

Die Merkmale und ihre Typen sind durch einen Benutzer vorgegeben oder werden automatisch erkannt. Eine gespeicherte Tabelle ordnet jedem Merkmalstyp oder Featuretyp mindestens einen Methodenstandard zu, mit welchem ein solches Feature gefertigt werden kann. Ein Methodenstandard ist eine Folge von Modulen, wobei ein Modul eine Bearbeitungseinheit ist, die in einer Operation ausgeführt werden kann. Für das Beispiel ist in der folgenden Tabelle zu jedem Featuretyp ein ausgewählter Methodenstandard angegeben, wobei "FS" als Abkürzung für "Füllschieber" steht:

| Schnitt | Featuretyp | Methodenstandard (Vorschlag) | Module |
|---------|-----------|------------------------------|--------|
| A - A | Hinterschnittige Nachformung | vorschneiden, abkanten, nachformen mit Füllschieber, Schieberbeschnitt | schneiden abkanten nachformen mit FS schneiden nicht Z |
| B - B | Z - Flansch | schneiden, nachformen | schneiden nachformen |
| C - C | L - Flansch | schneiden, abkanten | schneiden abkanten |
| D - D | Durchstellung | schneiden, durchstellen | schneiden durchstellen |
| | Loch 15 | lochen | lochen |

(fortgesetzt)

| Schnitt | Featuretyp | Methodenstandard (Vorschlag) | Module |
|---------|------------|------------------------------|--------|
| | Ganzes Bauteil | ziehen | ziehen |
| | Bauteilrand | Platine schneiden | schneiden |

Eine weitere gespeicherte Tabelle ordnet jedem Modul mindestens eine Variante von Modul-Komponenten zu. Komponenten sind Teile von Werkzeugen, mit denen das Modul umgesetzt werden kann. Für das Beispiel zeigt die folgende Tabelle die resultierenden Modul-Komponenten:

| Featuretyp | Modul | Modul-Komponenten | | | |
|---|---|---|---|---|---|
| Hinterschnittige Nachformung | schneiden | Obermesser | Untermesser | | |
| | abkanten | Aktiv-Abkantbacke | Passiv-Abkantbacke | | |
| | nachformen mit FS | Aktiv-Nachformbacke | Passiv-Nachformbacke | Schieber | Füllschieber |
| | schneiden nicht Z | Obermesser | Untermesser | Schieber | |
| Z - Flansch | schneiden | Obermesser | Untermesser | | |
| | nachformen | Aktiv-Nachformbacke | Passiv-Nachformbacke | | |
| L - Flansch | schneiden | Obermesser | Untermesser | | |
| | abkanten | Aktiv-Abkantbacke | Passiv-Abkantbacke | | |
| Durchstellung | schneiden | Schneidmatrize | Stempelhalteplatte | Schneidstempel | Abstreiferplatte |
| | durchstellen | Abkantbacke | Stempelhalteplatte | Formstempel | Niederhalterplatte |
| Loch | lochen | Schneidmatrize | Stempelhalteplatte | Lochstempel | Abstreiferplatte |
| Bauteil | ziehen | Matrize | Blechhalter | Stempel | |
| Bauteilrand | schneiden | Obermesser | Untermesser | Abstreiferplatte | |

Die Parameter der Komponenten werden in einer Komponenten-Instanziierung aufgrund von Parametern der Features erzeugt, die mit der Komponente hergestellt werden. Regeln für das Beispiel sind in der folgenden Tabelle angegeben. Die Regeln sind in Form von ausführbaren Programminstruktionen gespeichert. Mit $f_1$ und $f_2$ sind vorgegebene, gespeicherte Funktionen bezeichnet:

| Komponente | Parameter | Instanziierungsregel |
|---|---|---|
| Obermesser | Länge | Flanschlänge + Zuschlag |
| | Breite | $f_1$(Messerlänge) |
| | Höhe | $f_2$(Messerlänge) |
| | Härteverfahren | laserhärten |
| | Material | Halbzeug |
| Untermesser | Länge | Flanschlänge + Zuschlag |
| | Breite | $f_1$(Messerlänge) |
| | Höhe | $f_2$(Messerlänge) |
| | Härteverfahren | laserhärten |
| | Material | Halbzeug |
| ... | ... | ... |

Damit sind die Eigenschaften der Werkzeugkomponenten bekannt, und in einem nächsten Schritt wird daraus der Ressourcenverbrauch zur Fertigung der Werkzeuge bestimmt. Dieser ist in der Regel als Funktion $f_1, f_2, \ldots f_n, f_m \ldots$, $g_1, g_2, \ldots g_n \cdot g_m \ldots$, $h_1, h_2, \ldots h_n, h_m \ldots$ von einer oder mehreren Variablen abgelegt. Typischerweise sind diese Variablen eine oder mehrere der geometrischen Abmessungen (Länge L, Breite B, Höhe H), oder weitere Parameter, die aufgrund der oben beschriebenen Instanziierung der Komponenten bekannt sind. Die folgende Tabelle zeigt Verbrauchsfunktionen oder Kostenfunktionen für verschiedene Bearbeitungsschritte zur Herstellung der Komponenten.

| Komponente | Verbrauchsfunktionen (in Abh. der Parameter) | | | | | | | |
|---|---|---|---|---|---|---|---|---|
| | Methoden-planung | Konstruktion | Fräsen u. bohren | laserhärten | Endmontage | Sathlguss 1.2385 | Sphaeroguss GGG 50 | ... |
| Obermesser aus Guss, lasergehärtet, L=350mm, B=... | - | $f_1(L)$ | $f_k(L,B)$ | $f_n(L)$ | $f_m(L)$ | $f_r(L,B,H)$ | - | ... |
| Untermesser aus Guss, lasergehärtet, L=350mm, B=... | - | $g_l(L)$ | $g_k(L,B)$ | $g_n(L)$ | $g_m(L)$ | $g_r(L,B,H)$ | - | ... |
| ... | ... | ... | ... | ... | ... | ... | ... | ... |
| Füllschieber, Eigenfertigung, L=350mm, B=... | - | $h_1(L)$ | $h_k(L)$ | ... | $h_m(L)$ | ... | $h_s(L,B,H)$ | ... |
| ... | ... | ... | ... | ... | ... | ... | ... | ... |

Die Verbrauchsfunktionen geben den Ressourcenverbrauch an, also Arbeitsstunden oder Materialverbrauch oder Maschinenbenutzungszeiten etc. Anhand der vorbekannten Kosten pro Einheit der jeweiligen Ressource werden die monetären Kosten bestimmt.

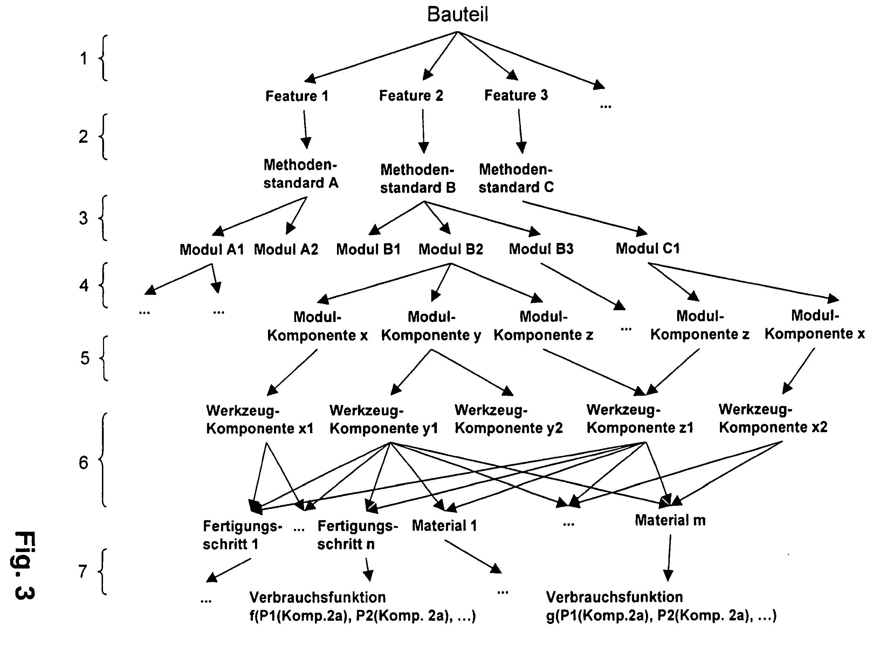

**Figur 3** zeigt eine Struktur der Daten zur Modellierung einer Folge von Umformschritten. Diese Struktur gilt grundsätzlich einerseits für die Gesamtheit der allgemein verwendbaren Daten, die im Computersystem vor der Ausführung des automatischen Verfahrens gespeichert und bereitgehalten werden. Dies wird im Folgenden "allgemeines Modell" genannt. Andererseits gilt die Struktur für die Daten zu einem bestimmten Bauteil, die durch das Verfahren aus den allgemeinen Daten ausgewählt und anhand der Geometrieparameter des Bauteils instanziiert worden sind. Dies wird im Folgenden "instanziiertes Modell" genannt.

In den Verbrauchsfunktionen der Figur bezeichnen P1, P2 Parameter der Komponenten.

Die Pfeile in der Figur bezeichnen jeweils eine Zuordnung. Typischerweise lassen sich die Zuordnungen durch Tabellen darstellen. Auf einer **ersten Zuordnungsebene 1** sind einem Bauteil alle seine Features zugeordnet. Diese Zuordnung existiert nur im instanziierten Modell.

Auf einer **zweiten Zuordnungsebene 2** ist jedem Feature ein Methodenstandard zugeordnet. Im allgemeinen Modell kann dies mehr als ein Methodenstandard pro Feature sein. Im instanziierten Modell wird genau ein Methodenstandard pro Feature durch einen Benutzer oder automatisch ausgewählt.

Auf einer **dritten Zuordnungsebene 3** sind jedem Methodenstandard ein oder mehrere Module zugeordnet. Diese Zuordnung ist durch das allgemeine Modell vorgegeben und wird im instanziierten Modell übernommen.

Auf einer **vierten Zuordnungsebene 4** sind jedem Modul, in Abhängigkeit des Featuretyps ein oder mehrere Modul-Komponenten zugeordnet. Diese Zuordnung ist durch das allgemeine Modell vorgegeben und wird im instanziierten Modell übernommen.

Auf einer **fünften Zuordnungsebene 5** ist jeder Modul-Komponente eine Werkzeug-Komponente zugeordnet. Dabei können, in Abhängigkeit der Feature-Parameter, eine oder mehrere Werkzeug-Komponente(n) zugeordnet werden, z.B. mehrere Formbacken können einem einzigen langen Flansch zugeordnet werden. Diese Zuordnung ist im allgemeinen Modell durch Tabellen, kombiniert mit Berechnungsregeln, vorgegeben. Im instanziierten Modell werden anhand dieser Berechnungsregeln die Parameter der Werkzeug-Komponente(n) bestimmt. Des weiteren werden in Abhängigkeit gewisser Kriterien eine oder mehrer Werkzeug-Komponenten durch eine einzige gemeinsame Komponente ersetzt. So werden beispielsweise für zwei Löcher, bei denen der Winkel zwischen den Bearbeitungsrichtungen innerhalb einer gewissen Toleranz liegt und deren Abstand kleiner als ein gewisser Grenzwert ist, die zugeordneten Stempelhalteplatten durch eine einzige ersetzt. Deren Grösse wird anhand der Lochgrössen und des Abstands der Löcher bestimmt.

Auf einer **sechsten Zuordnungsebene 6** sind jeder Werkzeug-Komponente ein oder mehr Ressourcen zugeordnet, die zur Bereitstellung durch Herstellung, Kauf, Bearbeitung etc. der Komponente oder durch die Komponente verursachte Bearbeitung an anderen Komponenten, verbraucht werden und zusammen den Bereitstellungsaufwand bestimmen. Diese Zuordnung ist durch das allgemeine Modell als Tabelle von Ressourcen vorgegeben und wird im instanziierten Modell übernommen.

Auf einer **siebten Zuordnungsebene 7** sind jeder Ressource Verbrauchsfunktionen zur Bestimmung der Kosten als Funktion der Komponentenparameter zugeordnet. Diese Zuordnung ist durch das allgemeine Modell als Tabelle von Funktionen vorgegeben und führt im instanziierten Modell zum Berechnen dieser Funktionen in Abhängigkeit der Komponentenparameter. Die sechste und siebte Zuordnungsebene können auch zusammengefasst durch eine einzige Zuordnung von Verbrauchsfunktionen zu Werkzeug-Komponenten realisiert werden.

Die gespeicherten Tabellen und Berechnungsvorschriften bilden ein Kalkulationsschema. Im Folgenden werden die zugrundeliegenden Zusammenhänge und Datenstrukturen für die einzelnen Zuordnungsebenen ausführlicher erläutert:

**Erste Zuordnungsebene**

Was ist ein Feature (Bauteildetail)?

- ein Feature ist ein Detail in der Bauteilgeometrie.
- es erfüllt eine bestimmte Funktion (Anbauflansch, Kabeldurchbruch, Design, etc.).
- es erfordert eine bestimmte Fertigungsqualität (unterschiedliche Toleranzen bei Löchern für Anbau im Rohbau, Löchern für die Anbringung von Abdeckungen, Löcher für Ablauf von Lack nach Lacktauchbad etc.).
- die Realisierung kann durch eine Abfolge von lokalen Umform-, Biege-, Stanz-, Schneideoperationen beschrieben werden.
- jedes Feature hat einen gewissen Typ (Flansch, Durchbruch,...), welcher von den geometrischen Eigenschaften des Features abhängt. Automatisch erkannt werden also nicht Features als solche, sondern vorerst Featuretypen.
- Bezogen auf die Ziehoperation wird das gesamte Bauteil oder grössere Bauteilbereiche als Feature betrachtet.
- Bezogen auf die Platinenschneidoperation wird der gesamte Bauteilrand als Feature betrachtet.

Die folgende Liste gibt einen Satz von Featuretypen, die vorzugsweise im rechnerbasierten Modell vorliegen und in den tieferen Ebenen des Strukturbaums weiter behandelt werden:

- Rundloch
- Rundloch nicht Z
- Recteckloch
- Rechteckloch nicht Z
- Langloch
- Langloch nicht Z
- Spezialloch
- Spezialloch nicht Z
- Durchbruch
- Durchbruch nicht Z
- Durchstellung rund
- Durchstellung rund nicht Z
- Durchstellung Langloch
- Durchstellung Langloch nicht Z
- Durchstellung Rechteckloch
- Durchstellung Rechteckloch nicht Z
- Durchstellung Spezialloch
- Durchstellung Spezialloch nicht Z

- Flansch
- Flansch nicht Z
- Nachformung
- Nachformung nicht Z
- Bauteil(bereich) für Ziehen
- Aussenrand
- Segment Aussenrand
- Segment Aussenrand nicht Z
- Segment Durchbruch
- Segment Durchbruch nicht Z

Die Bezeichnungen mit "nicht Z" stehen jeweils dafür, dass das Feature mit einem Schieber hergestellt werden soll (Die geometrische Richtung "Z" ist die Vertikale, also die Hauptarbeitsrichtung einer Station, ein Schieber hingegen bewegt sich waagrecht oder schräg, also "nicht in Z-Richtung"). Beispielsweise wird der Featuretyp "Langloch" automatisch erkannt. Wenn der Benutzer aus bestimmten Gründen vorgeben will, dass das Feature mit einem Schieber hergestellt wird, kann er den Featuretyp in "Langloch nicht Z" ändern. Diesem Featuretyp sind andere Methodenstandards zugeordnet als dem "Langloch" (siehe unten). Ein Spezialloch ist ein Loch, dessen Form weder einem Rund-, noch einem Rechteck- oder einem Langloch entspricht. Gleiches gilt für die Durchstellung Spezialloch.

Die automatische Erkennung von Featuretypen geht vorzugsweise von einem Polyeder-Modell oder einem parametrischen Modell des Bauteils aus. Dabei sind zwei Vorgehensweisen möglich: Bestimmte Modelle werden in der Regel durch den CAD (Computer Aided Design)-Konstrukteur aus einzelnen Teilflächen zusammengesetzt. Solche Teilflächen entsprechen häufig gerade den zu identifizierenden Features. Beispielsweise ist eine Kühlerhaube aus zwei im wesentlichen flachen Abschnitten und mehreren komplizierter geformten Randbereichen zusammengesetzt. Die Features werden gemäss der ersten Vorgehensweise also anhand der Modellstruktur erkannt. In der zweiten Vorgehensweise wird die Geometrie, also die Form des modellierten Bauteils analysiert. Dabei wird auf allgemein bekannte Standardverfahren der computerbasierten Geometrieverarbeitung ("computational geometry") zurückgegriffen, wie zum Beispiel dem Berechnen von Querschnitten durch einen Körper, der Berechnung der Krümmung einer Oberfläche, der Bestimmung von Löchern und Rändern etc.

Features sind typischerweise Löcher, Durchbrüche, Durchstellungen, Flansche sowie Nachformbereiche. Um Flansche oder Nachformbereiche zu finden, entfernt man aus dem Bauteil alle Verrundungen, deren Radius einen gewissen Grenzwert, z.B. 4 mm, unterschreitet. Das Bauteil zerfällt dadurch in mehrere Teile, welche anschliessend noch einmal genauer untersucht werden. Abgetrennte Randbereiche, welche auf einer Ebene oder auf einer allgemeinen Zylinderfläche liegen, werden am Aussenrand als Abkantflansch und an einem Loch als Durchstellung erkannt, ansonsten sind es Nachformbereiche. Bereiche im Bauteil-Inneren, die durch das Entfernen der Verrundungen vom Bauteil abgetrennt werden, werden ebenfalls als Nachformbereiche erkannt. Die vorgängig eliminierten Verrundungen, welche zur Abtrennung der Bereiche geführt haben, werden diesen zugeordnet. Eliminierte Verrundungen, welche zu keiner Abtrennung eines Bereiches führen, werden als eigenständige Nachformbereiche identifiziert. Hinterschnittige Bereiche (nicht Z) lassen sich mittels Analyse der Winkel zwischen Flächennormalen und Pressenarbeitsrichtung identifizieren. Löcher, Durchbrüche und Ränder sind durch die Topologie der Teilflächen an den Stellen, an denen keinen Nachbarteilflächen vorhanden sind, gegeben. Nicht aus Pressenarbeitsrichtung fertigbare Löcher und Randbereiche (nicht Z) lassen sich grundsätzlich mittels Analyse der Winkel zwischen der Flächennormalen entlang des Randes und der Pressenarbeitsrichtung identifizieren. Insbesondere können dazu der Schnittwinkel und der Scherwinkel berechnet und verwendet werden. Der Schnittwinkel ist der Winkel zwischen der Flächennormalen und der Projektion der Arbeitsrichtung auf die Ebene die durch die Flächennormale und Flächentangente aufgespannt wird. Der Scherwinkel ist analog definier, mit Projektion auf die Ebene von Normaler und Binormaler.

Mit der Identifikation der Features geht die Bestimmung der Feature-Parameter einher, wobei bevorzugt jene berechnet werden, die zur Bestimmung der Komponentenparameter der in den für das Feature definierten Modulen vorkommenden Modul-Komponenten nötig sind. Diese sind:

- Rundloch / Runde Durchstellung: Fläche, Radius
- Langloch / Langloch-Durchstellung: Umfang, Fläche, Länge, Radius
- Rechteckloch / Rechteckloch-Durchstellung: Umfang, Fläche, Länge, Breite
- Spezialloch / Spezialloch-Durchstellung: Umfang, Fläche
- Durchbruch: Umfang, Fläche
- Flansch / (hinterschnittiger) Nachformbereich: Länge(=Länge des Radius, entlang dem abgekantet / nachgeformt wird), Schnittlänge (=Länge des Aussenrandes am Flansch / Nachformbereich), Fläche
- Aussenrand / Segment Aussenrand / Segment Durchbruch: Länge
- Bauteilbereich für das Ziehen: Länge, Breite, Fläche

**Zweite Zuordnungsebene**

Jedes Feature hat einen bestimmten Typ; dieser legt den default - Methodenstandard sowie die Auswahl an alternativen Methodenstandards für das Feature fest. Für jeden Featuretyp sind die in Frage kommenden Methodenstandards hinterlegt und können vom Benutzer geändert werden. Die Methodenstandards reflektieren firmen- oder kundenspezifische Präferenzen und Qualitätsanforderungen.

Beispiel 1: Feature "Blinker" beim Kotflügel

- Typ "Durchstellung Spezialform"
- Default-Methodenstandard: "Lochen, Durchstellen" (2 Module)
- Alternative Methodenstandards:

    ◦ "Durchstellen in einem Zug" (1 Modul)

Beispiel 2: Feature "Stossfängeranbindung" beim Kotflügel

- Typ "Flansch"
- Default-Methodenstandard: "schneiden, abkanten"
- Alternative Methodenstandards:

    ◦ "abkanten"
    ◦ "schneiden, abkanten, schneiden mit Schieber"
    ◦ "schneiden, abkanten, nachformen mit Füllschieber"
    ◦ "abkanten, nachformen mit Füllschieber, schneiden mit Schieber"
    ◦ "schneiden mit Schieber, abkanten, nachformen mit Füllschieber"
    ◦ "schneiden mit Schieber, nachformen mit Füllschieber"

Beispiel 3: Feature "Loch in Schwelleranbindung" beim Kotflügel

- Typ "Rechteckloch"
- Default-Methodenstandard: "lochen"
- Alternative Methodenstandards: keine, für Standard-Löcher gibt es nur "lochen"; möchte man es bspw. über Schieber lochen, so kann man den Feature-Typ in "Rechteckloch nicht Z" ändern, welches den Methodenstandard "lochen über Schieber" besitzt.

**Dritte Zuordnungsebene**

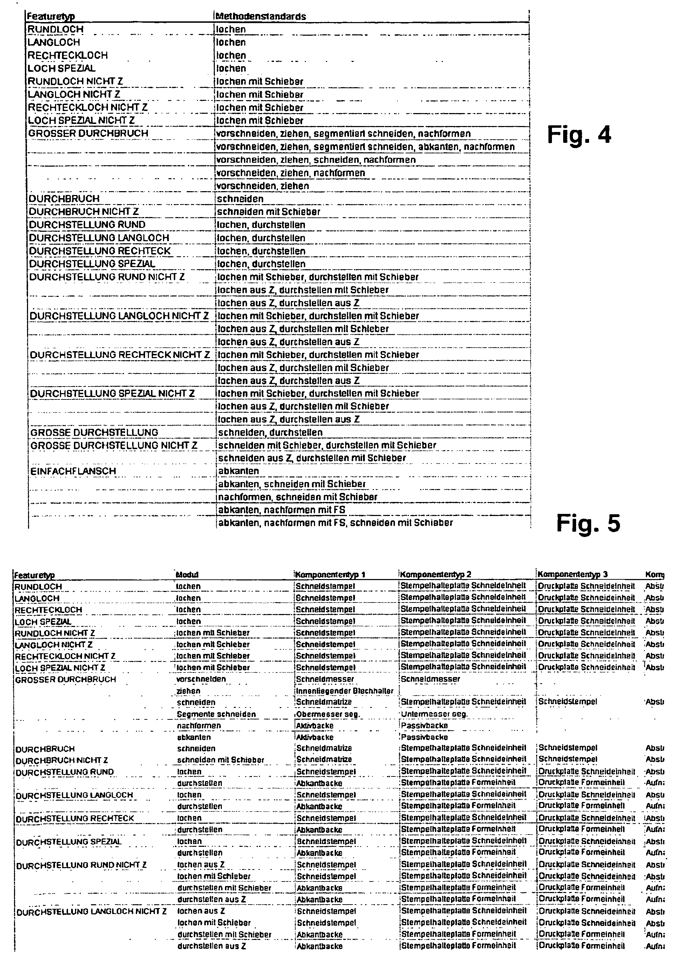

Jeder Methodenstandard besteht aus einem oder mehreren Modulen, dabei entspricht ein Modul dem, was innerhalb einer Operation an dem jeweiligen Feature realisiert wird. Beispielsweise bilden die Module "abkanten" und "über Schieber beschneiden" zusammen einen Methodenstandard. Figur 4 zeigt eine solche Liste von Featuretypen und zugeordneten Methodenstandards. Zu jedem Featuretyp ist entweder nur ein einzelner Methodenstandard angegeben, oder es sind mehrere Methodenstandards zu diesem Featuretyp untereinander aufgelistet. Die Namen der Methodenstandards sind in der Regel selbsterklärend, d.h. sie enthalten die Namen der in ihnen enthaltenen Module. Siehe dazu auch die obigen Beispiele für Methodenstandards.

Beispielsweise steht das Feature "Durchstellung rund nicht Z" für eine Durchstellung, die mit einem Schieber nicht in Z-Richtung erzeugt wird. Das Feature kann mit einem von drei Methodenstandards hergestellt werden. Im ersten geschieht das Lochen und auch das Durchstellen mit einem Schieber. Im zweiten geschieht das Lochen in Z-Richtung, und anschliessend wird der gelochte Abschnitt mit einem Schieber durchgestellt. Ein solcher Methodenstandard wird beispielsweise benötigt, wenn die Durchstellung auf einem Flansch liegt, welcher zunächst ausgelegt ist - darum kann das Loch aus Z gefertigt werden - und dann abgekantet wird, was ein Durchstellen aus "nicht Z" erforderlich macht. Im dritten Methodenstandard erfolgt das Lochen und das Durchstellen aus Z - wie bei der zweiten Variante wird dies beispielsweise für Durchstellungen auf einem zunächst ausgelegten Flansch benötigt.

**Vierte Zuordnungsebene**

Für jeden Featuretyp und jedes Modul seiner Methodenstandards ist hinterlegt, welche Modul-Komponenten benötigt werden, um dieses Modul zu realisieren. **Figur 5** zeigt eine solche Liste von Featuretypen und Modultypen mit zugeordneten Modul-Kompönenten. Die Modul-Komponenten können, wie in der Figur, auch als "Komponententypen" bezeichnet werden. Alle zu einem Featuretypen definierten Methodenstandards entstehen durch Kombination der in dieser Liste definierten Module. Beispielsweise kann der Featuretyp "Durchstellung Rund" durch einen Methodenstandard mit den Modulen lochen / durchstellen erzeugt werden. Die folgenden Spalten geben die verwendeten Komponenten an:

Beispiel 1: Featuretyp "Durchstellung Rund"

- Es benötigt das Modul "lochen" als Modul-Komponenten (nicht alle Spalten der Darstellung sind in der **Figur 5** sichtbar): Schneidstempel, Stempelhalteplatte, Schneideinheit, Druckplatte Schneideinheit, Abstreiferplatte, Schneidmatrize, und Matrizenaufnahme.

- Das Modul "Durchstellen" benötigt die Modul-Komponenten: Abkantbacke, Stempelhalteplatte Formeinheit, Druckplatte Formeinheit, Aufnahmeplatte, Formstempel und Niederhalterplatte.

Beispiel 2: Featuretyp "Flansch"

- Modul "Abkanten" benötigt die Modul-Komponenten Aktivbacke und Passivbacke
- Modul "Abkanten mit Schieber" benötigt die Modul-Komponenten Aktivbacke, Passivbacke, Abkantschieber und Schieber-Niederhalter
- Modul "Nachformen mit Füllschieber" benötigt die Modul-Komponenten Aktivbacke, Passivbacke, Füllschieber, Abkantschieber und Schieber-Niederhalter
- Modul "Schneiden" benötigt die Modul-Komponenten Obermesser und Untermesser
- Modul "Schneiden mit Schieber" benötigt die Modul-Komponenten Beschneideschieber, Schieber-Niederhalter, Obermesser und Untermesser

**Fünfte Zuordnungsebene**

Um nun

- von der Modul-Komponente (z.B. "Lochstempel rund") zu einer "real" existierenden Werkzeug-Komponente (wie man sie auch kaufen kann, z.B. "1 Lochstempel rund, Radius 6mm"); und
- von der realen Werkzeug-Komponente zu dem von ihr bedingten Ressourcenverbrauch

zu kommen, werden zunächst für jede Komponente die Parameter bestimmt, von denen diese Zuordnungen abhängen (für "Lochstempel rund" sind dies z.B. Radius, Länge und Material). Diese Zuordnungen sind im Kalkulationsschema hinterlegt.

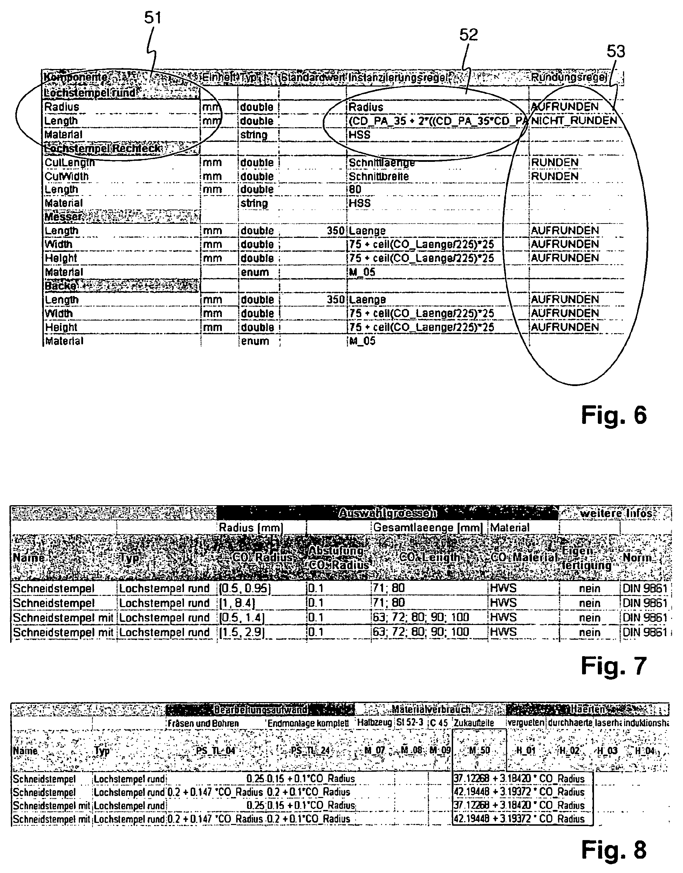

**Figur 6** zeigt eine solche Liste von Modul-Komponenten mit den jeweiligen Komponenten-Parametern. Eine Modul-Komponente wird durch die Belegung ihrer Parameter mit festen Werten zu einer instanziierten oder konkreten Werkzeug-Komponente. In der Figur 5 sind beispielsweise die Parameter eines "Lochstempels rund" im Bereich 51 aufgelistet. Jeder Parameter einer Komponente wird mit einem Wert versehen, welcher sich aus

- der Geometrie des zugehörigen Bauteildetails; und/oder

- bauteil- und auftragsspezifischen Werten wie Blechdicke, Blechmaterial, Werkzeuggröße, etc.

berechnet. Eigenschaften wie Material oder Härtungsverfahren werden durch Zeichenfolgen oder durch eine Nummer (mit Bezug auf eine Liste von Bezeichnungen) dargestellt. Die zugehörige Zuordnungsregel nennt sich Instanziierungsregel und ist ebenfalls im Kalkulationsschema hinterlegt. In der **Figur 6** sind beispielsweise Regeln für die Parameter des "Lochstempels rund" im Bereich 52 aufgelistet. Die Variablennamen in der Spalte "Instanziierungsregel" beziehen sich

- auf Parameter des zugeordneten Features ("Radius", "Laenge"), oder
- auf bereits berechnete Parameter der Komponente selbst (beginnend mit "CO_..."), oder
- auf Parameter, welche in Abhängigkeit von bauteil- und/oder auftragsspezifischen Daten (die der Benutzer zur Laufzeit ändern kann) belegt werden, (beginnend mit "CD..."), oder
- auf Parameter die für diese Komponente fest vorgegeben sind (Materialbezeichnungen "HSS" oder "M_05").

Beispiele für die Verwendung der Geometrie des zugehörigen Bauteildetails zur Bestimmung von Komponentenparametern sind schon im einführenden Beispiel gegeben, also Messerlänge = f(Flanschlänge). Weitere Beispiele sind:

- Radius des Lochstempels = Radius des Rundlochs.
- Länge des Abkantschiebers = Länge des Flansches + 200mm.
- Breite des Schneidwerkzeug-Niederhalters = 20.2381 + 1.07619 * Breite des Bauteils.

Für die berechneten Parameterwerte wird eine möglichst ähnliche "reale" Instanz aus der Datenbank bestimmt. Für jeden Parameterwert muss angegeben werden, was passieren soll, wenn der konkrete Wert (der evtl. auch selber durch Rundungsfehler ein wenig verfälscht wurde) nicht in der Datenbank vorliegt: soll der nächste, der nächstgrößere oder der nächstkleinere Wert genommen werden oder soll es eine Fehlermeldung geben? Dies steht in den Rundungsregeln. In der **Figur 6** sind beispielshaft Rundungsregeln im Bereich 53 aufgelistet.

Beispiel für die Komponenten-Instanziierung: Feature "Stossfängeranbindung" beim Kotflügel

- Featuretyp: Flansch
- Annahmen:

    ◦ Gewählter Methodenstandard ist der Default: "Abkanten"
    ◦ Länge des Flansches: 430mm
    ◦ Gewählte Standardlänge für Backe: 350mm (kann der Benutzer über ein Menu im GUI festlegen)

- Benötigte-Modul-Komponenten: Aktivbacke, Passivbacke
- Aktiv- und Passivbacke haben jeweils die Parameter Länge, Breite, Höhe, Material und Härteverfahren
- Da die Flanschlänge grösser als eine vorgegebene Standardlänge ist, werden zwei Passiv- und zwei Aktivbacken erzeugt; jeweils eine der Länge 350mm und eine der Länge 80mm.
- Breite und Höhe der Backe werden aus ihrer Länge berechnet, Material und Härteverfahren werden durch Default-Werte gesetzt, die der Benutzer auf Wunsch im GUI ändern kann.

Für jede im Kalkulationsschema auftretende Komponente gibt es in der **Komponenten-Datenbank** einen oder mehrere Einträge für die verschiedenen realen Varianten der Komponente.
Ein Eintrag besteht aus

- Namen der Komponentenvariante.
- konkreten Werten (oder Wertebereichen) für die einzelnen Komponenten-Parameter.
- evtl. weitere Informationen (Norm,...).
- Verbrauchsfunktionen für die Prozess-Schritte bzw. Materialen, die von den Parameter-Werten abhängen.

**Figur 7** zeigt eine Liste von Komponenten mit zugeordneten Auswahlgrössen. Beispielsweise gibt es einen Lochstempel mit Radius 1, 1.1, 1.2,...,8.3, 8.4 mm jeweils in den Gesamtlängen 71 und 80 mm aus dem Material HWS (chromlegierter Spezialstahl entsprechend DIN 9861). Die Auswahlgrößen Radius, Länge, Material entsprechen den Komponenten-Parametern im Kalkulationsschema. Es wird also anhand der konkreten Komponenten-Parameter durch systematisches Durchsuchen der Tabelle eine nächstliegende reale Werkzeug-Komponente ermittelt.

**Sechste und siebte Zuordnungsebene**

**Figur 8** zeigt eine Liste von Werkzeug-Komponenten mit zugeordneten Aufwandsfunktionen oder Verbrauchsfunktionen, also Funktionen, die den Ressourcenverbrauch in Abhängigkeit von den Auswahlgrößen und evtl. anderer Werte wie Werkzeuggröße etc. berechnen (in den Spalten "Bearbeitungsaufwand"). Die in Figur 7 gezeigte Liste ist mit der Liste der Figur 6 kombiniert, sie ist nur aus Platzgründen separat dargestellt. Mit Hilfe der Komponenten-Datenbank kann also für jede Komponente der von ihr verursachte Ressourcenverbrauch bestimmt werden. Dabei werden eventuell kleine Zukaufteile zu einem "Normteilpaket" zusammengefasst.
Um die Kosten für ein Werkzeug zu erhalten, wird dann noch

- für jeden Prozess-Schritt bzw. für jedes Material über den Aufwand für die einzelnen Komponenten aufsummiert,
- die Summe pro Prozess-Schritt mit dem jeweiligen Stundensatz multipliziert,
- die Summe pro Material mit dem jeweiligen Materialkostensatz multipliziert und
- über die daraus entstehenden Kosten aufsummiert.

Abhängig von der Bauteilart (Beplankung, Innenteil) und dem Material (Stahl, hochfester Stahl, Alu) werden zu einzelnen Verbrauchsfunktionen noch Zuschläge hinzumultipliziert.
Die Gesamtkosten lassen sich also als folgende Summe darstellen:

$$\sum_{k=1}^{\#\text{Operationen}} \sum_{i=1}^{\substack{\#\text{Komponenten} \\ \text{in Operation } k}} \left( \left[ \sum_{j=1}^{\#\text{ProzessSchritte}} h_{ij}^{t} * HC_{j} \right] + \left[ \sum_{r=1}^{\#\text{Materialien}} m_{ir}^{t} * M_{r} \right] \right)$$

wobei $h_{ij}^{t}$ der Arbeitszeit für die Komponente i im Prozessschritt j in der Operation k ist, $HC_j$ der Stundensatz, $m_{ir}^{t}$ der Materialverbrauch und $M_r$ Materialkostensatz ist.
Dabei werden Arbeitsstunden bzw. Materialverbrauch pro Komponente in Abhängigkeit von den entsprechenden Komponentenparametern und eventuell globaler Parameter (Zuschlagssätze,...) berechnet.
Der Stukturbaum der **Figur 3** zeigt also die Zusammenhänge, über welche für jedes Feature und daraus für jedes Modul mittels Modul-Komponenten und Komponenten der Ressourcenverbrauch berechnet wird.

**Aufdatieren der Verbrauchsfunktionen**

In einer bevorzugten Ausführungsform der Erfindung werden die Aufwandsfunktionen respektive ihre Parameter nach Massgabe eines tatsächlichen Aufwandes nachgeführt. Dazu wird bei der Produktion der Werkzeuge respektive ihrer Komponenten der tatsächliche Aufwand an Stunden und Material erfasst, und zusammen mit den physischen Auswahlparametem der Komponenten gespeichert. Durch beispielsweise eine Regressionsanalyse wird der funktionale Zusammenhang zwischen dem Aufwand und den Komponentenparametern bestimmt. Der neue funktionale Zusammenhang ersetzt die bisherige Verbrauchsfunktion.

**Erzeugen des Methodenplanes**

Um einen vollständigen Methodenplan zu bestimmen, werden die Module auf die Operationen verteilt. Dies erlaubt auch eine Kostenverteilung auf die einzelnen Operationen. Die Verteilung geschieht unter Berücksichtigung einer Reihe von Zusatzbedingungen, im Folgenden "Constraints" genannt. Es gibt verschiedene Arten von Constraints, welche die Verteilung der Module auf die Operationen steuern:

- Gleichzeitigkeit: zwei Module müssen in der gleichen Operation gefertigt werden

  ◦ Beispiel: mehrere nahe beieinander liegende "Löcher nicht Z" werden über den gleichen Schieber gefertigt. Ein solcher Constraint wird automatisch aus einer Benutzerwahl "gemeinsame Komponente" erzeugt, welche die Löcher miteinander verknüpft. Darum müssen die entsprechenden "Lochen"-Module in derselben Operation sein.

- Ausschluss: zwei Module dürfen nicht in der gleichen Operation gefertigt werden

◦ Beispiel: Seitenwand: "Nachformen mit Schieber" für Feature A-Säule oben und "Nachformen mit Schieber" für Feature Dachkanal können nicht zusammen gefertigt werden, da zu wenig Platz für die beiden Schieber ist. Eine solche Bedingung wird vorzugsweise automatisch erzeugt, indem die Werkzeugpositionen und ihr Raumbedarf durch ein Geometriemodell ermittelt werden, und überprüft wird, ob Werkzeuge miteinander kollidieren oder den gleichen Raum beanspruchen. Die Werkzeugpositionen und ihre Arbeitsbewegung werden dazu wiederum automatisch aus der Bauteilgeometrie abgeleitet, die von den Werkzeugen durchfahrenen Volumina werden berechnet und auf Überschneidung geprüft.

- Reihenfolge: Modul A muss vor oder nach Modul B gefertigt werden

  ◦ Beispiel: die Module innerhalb eines Methodenstandards dürfen nicht vertauscht werden.

- Operationstypen: Modul A darf nicht in Operationen vom Typ x gefertigt werden

  ◦ Beispiel: Abkanten darf nicht in Operationen vom Typ "Platinenschnitt", "Tiefziehwerkzeug" oder "Schneidwerkzeug" sein.

Constraints können also

- als allgemeine Regeln, die in jedem Fall eingehalten werden müssen, standardmässig vorgegeben sein;
- als spezielle Regeln beispielsweise einem bestimmten Methodenstandard zugeordnet sein und bei dessen Verwendung automatisch aktiviert werden;
- als kontextabhängige Regeln durch Analyse von geometrischen Beziehungen automatisch generiert werden; oder
- manuell vorgebbar sein.

Unter Berücksichtigung dieser Constraints werden die Module automatisch den Operationen zugeordnet. Dabei wird vorzugsweise die Zuordnung durch ein Optimierungsverfahren variiert, um die Anzahl der Operationen oder um die Kosten oder um eine Mischfunktion zu minimieren. Das resultierende kombinatorische Optimierungsproblem lässt sich beispielsweise als ILP (Integer Linear Program) formulieren. Dafür sind als Optimierungsverfahren beispielsweise bekannt:

- Cutting Plane
- Branch and Bound - Verfahren
- Lagrangian Decomposition
- Constraint Programming

Insbesondere zur Minimierung der Kosten wird in einer bevorzugten Variante der Erfindung der Suchraum bei der Optimierung erweitert, indem beispielsweise ...

- mehrere oder alle für ein Feature definierten Methodenstandards berücksichtigt werden.
- mehrere oder alle Varianten einer Komponente berücksichtigt werden. Beispielsweise ist es möglich, dass sich eine Operation und damit auch Kosten einsparen lassen, indem man einen Standard-Schieber durch ein Geber-Nehmer-System ersetzt.
- Varianten der Schwenklage berücksichtigt werden. Beispielsweise ist es möglich, dass Features, die bei der ursprünglichen Schwenklage mit Schieber bearbeitet werden müssen, durch eine veränderte Schwenklage aus Pressenarbeitsrichtung realisiert werden können und somit die Schieber eingespart werden können.
- verschiedene Varianten von gemeinsamen Komponenten berücksichtigt werden. Beispielsweise werden Löcher üblicherweise zu Gruppen zusammengefasst, welche zusammen gefertigt werden (und sich dann auch Komponenten wie z.B. Stempelhalteplatten oder - falls nötig - Schieber teilen). Unterschiedliche Gruppierungen können zum einen zu einer unterschiedlichen Anzahl von Gruppen führen, zum anderen zu unterschiedlichen gemeinsamen Komponenten. Beides kann sich auf die Kosten auswirken.

Der Begriff "Liste" ist konzeptionell zu verstehen, d.h. dass eine listenartige Zuordnung computertechnisch implementiert ist. Dies kann mit Tabellen oder anderen Datenstrukturen in beispielsweise Spreadsheets, Datenbanken etc. geschehen.

**Patentansprüche**

1. Verfahren zur computergestützten Generierung von Werkzeugparametern für Werkzeuge zur Herstellung von Umformblechteilen durch Umformprozesse, wobei eine Repräsentation eines Herstellungsprozesses erzeugt wird, welche einen Satz von Bearbeitungsschritten und geometrische Parameter von Werkzeugen dieser Bearbeitungsschritte zur Herstellung eines Bauteils enthält, wobei das Verfahren die folgenden Schritte aufweist

   • Bestimmen eines Satzes von Geometriemerkmalen (11, 12, 13, 14, 15) des Bauteiles (10) in einem Geometriemodell des Bauteiles (10), wobei jedes der Geometriemerkmale (11, 12, 13, 14,15) durch einen Merkmalstyp und durch geometrische Parameter zur Beschreibung der geometrischen Form des Geometriemerkmales (11, 12, 13, 14, 15) beschrieben ist;
   • Bestimmen eines zugeordneten Methodenstandards zu jedem der Geometriemerkmale (11, 12, 13, 14, 15), wobei ein Methodenstandard eine Variante zur Herstellung des jeweiligen Geometriemerkmales (11, 12, 13, 14, 15) beschreibt, die Auswahl der Methodens-tandards, die einem bestimmten Geometriemerkmal (11, 12, 13, 14, 15) zugeordnet werden können, vom Merkmalstyp des Geometriemerkmals (11, 12, 13, 14, 15) abhängig ist, und wobei ein Methodenstandard mindestens ein Modul aufweist, und ein Modul eine Bearbeitungseinheit repräsentiert und beschreibt, wobei eine Bearbeitungseinheit innerhalb einer Umformoperation ausführbar ist;
   • Bestimmen von Komponenten zu jedem der Module der Methodenstandards, wobei diese Komponenten die Teile von Werkzeugen beschreiben, die zur Realisierung des Modules erforderlich sind;
   • Bestimmen von Komponentenparametern aus den geometrischen Parametern der durch die Merkmalstypen beschriebenen Geometriemerkmale (11, 12, 13, 14, 15), wobei die Komponentenparameter geometrische Parameter der Komponenten respektive der entsprechenden Werkzeuge aufweisen.

2. Verfahren gemäss Anspruch 1, wobei zum Bestimmen eines zugeordneten Methodenstandards zu jedem der Geometriemerkmale (11, 12, 13, 14, 15) der folgende Schritt ausgerührt wird:

   • Auswählen eines Methodenstandards aus einer Liste, welche jedem Typ von Geometriemerkmal eine geordnete Folge von alternativen Methodenstandards zuordnet.

3. Verfahren gemäss Anspruch 1 oder 2, wobei zum Bestimmen von einem oder mehreren zugeordneten Modulen zu jedem der Methodenstandards der folgende Schritt ausgeführt wird:

   • Auswählen des oder der Module aus einer Liste, welche jedem Methodenstandard ein Modul oder eine Folge von Modulen zuordnet.

4. Verfahren gemäss einem der bisherigen Ansprüche, wobei zum Bestimmen von Modul-Komponenten zu jedem der Module der folgende Schritt ausgeführt wird:

   ▪ Auswählen von einer oder mehreren Modul-Komponenten aus einer Liste, welche jedem Modul eine oder mehrere Modul-Komponenten zuordnet.

5. Verfahren gemäss einem der bisherigen Ansprüche, wobei zum Bestimmen von konkreten Komponentenparametern aus den geometrischen Parametern der zugeordneten Geometriemerkmale der folgende Schritt ausgeführt wird:

   • Bestimmen von Komponentenmerkmalen aus einer Tabelle, welche den Geometriemerkmalen (11, 12, 13, 14, 15), in Abhängigkeit des Merkmalstyps jeweils Komponentenmerkmale zuordnet, und jeweils eine Vorschrift zur Bestimmung der Komponentenparameter aus den geometrischen Parametern des Geometriemerkmales enthält.

6. Verfahren gemäss einem der bisherigen Ansprüche, wobei das Bestimmen eines Satzes von Geometriemerkmalen (11, 12, 13, 14, 15) eines Bauteiles automatisch durch Extraktion aus dem Geometriemodell des Bauteiles vorgenommen wird.

7. Verfahren gemäss einem der bisherigen Ansprüche, aufweisend den weiteren Schritt:

   ▪ Bestimmen eines Methodenplanes, wobei ein Methodenplan eine geordnete Folge von Bearbeitungsschritten und die geometrischen Parameter von Werkzeugen dieser Bearbeitungsschritte enthält, durch Zuordnen jedes der Module zu einer Operation, unter Berücksichtigung von Randbedingungen, welche die Zuordnung jeweils eines Moduls in Abhängigkeit der Zuordnungen von anderen Modulen einschränken.

8. Verfahren gemäss Anspruch 7, wobei die Randbedingungen von mindestens einer der folgenden Kategorien sind:

- allgemeine Regeln, die in jedem Fall eingehalten werden müssen, und standardmässig vorgegeben sind;
- spezielle Regeln, die bei Verwendung eines Methodenstandards automatisch aktiviert werden;
- kontextabhängige Regeln, die durch Analyse von geometrischen Beziehungen zwischen Komponenten automatisch generiert werden; oder
- manuell vorgebbare Regeln.

9. Verfahren gemäss einem der bisherigen Ansprüche, aufweisend den weiteren Schritt:

- Bestimmen, für jede der Komponenten, von Komponentenkosten aus den Komponentenparametern, wobei die Komponentenkosten einen Ressourcenverbrauch für die entsprechenden Komponenten respektive die entsprechenden Werkzeuge repräsentieren;
- Bestimmen von Gesamtkosten als Summe der Komponentenkosten.

10. Verfahren gemäss Anspruch 9 in Abhängigkeit von Anspruch 7 oder 8, aufweisend die Schritte zur Bestimmung eines kostenoptimalen Methodenplanes:

- Bestimmen eines Methodenplanes;
- Bestimmen der Komponentenkosten und Bestimmen von Gesamtkosten als Summe der Komponentenkosten für diesen Methodenplan;
- Modifizieren von Parametern des Methodenplanes und neu Berechnen der Gesamtkosten durch ein Optimierungsverfahren, wobei die modifizierbaren Parameter mindestens einen umfassen von

    ◦ Zuordnung unterschiedlicher Bauteil-Schwenklagen zu einer Operation;
    ◦ Zuordnung unterschiedlicher Methodenstandards zu einem Geometriemerkmal (11, 12, 13, 14, 15);
    ◦ Zuordnung unterschiedlicher Varianten einer Komponente zu einem Modul;
    ◦ Zuordnung von Modulen zu Operationen; oder
    ◦ Zusammenfassung von Komponenten.

11. Verfahren gemäss Anspruch 9 oder 10, wobei zum Bestimmen von Komponentenkosten aus den Komponentenparametern die folgenden Schritte ausgeführt werden:

- Bestimmen einer realen Komponente, deren Parameter einen Unterschied zu konkret erforderlichen Komponenten minimieren mittels Durchsuchen einer Tabelle mit realen Komponenten und deren Parametern;
- Berechnen eines Ressourcenverbrauchs pro Komponente durch Einsetzen von Parametern der realen Komponenten in ein oder mehrere Verbrauchsfunktionen und Summieren der Ergebnisse dieser Verbrauchsfunktionen, wozu für jede Komponente vorgegebene Verbrauchsfunktionen gespeichert sind;
- Summieren der Komponentenkosten über alle verwendeten Komponenten.

12. Verfahren gemäss Anspruch 11, aufweisend die weiteren Schritte:

- Erfassen des tatsächlichen Ressourcenverbrauchs pro Komponente beim Herstellen der Komponenten;
- Nachführen der Verbrauchsfunktionen anhand des tatsächlichen Ressourcenverbrauchs.

13. Verfahren gemäss einem der bisherigen Ansprüche, aufweisend als ersten Schritt:

- Bestimmung mindestens einer Schwenklage, in welcher das Bauteil (10) zu fertigen ist.

14. Datenverarbeitungssystem zur computergestützten Generierung von Werkzeugparametern für Werkzeuge zur Herstellung von Umformblechteilen durch Umformprozesse, wobei das Datenverarbeitungssystem Mittel aufweist zur Durchführung des Verfahrens nach einem oder mehreren der Ansprüche 1 bis 13.

15. Computerprogramm zur computergestützten Generierung von Werkzeugparametern für Werkzeuge zur Herstellung von Umformblechteilen durch Umformprozesse, welches auf einer Datenverarbeitungseinheit ladbar und ausführbar ist, und welches bei der Ausführung das Verfahren nach einem oder mehreren der Ansprüche 1 bis 13 ausführt.

**16.** Datenträger, enthaltend ein Computerprogramm gemäss Anspruch 15.

**Claims**

**1.** A method for computer-aided generation of tool parameters for tools for the manufacture of sheet-metal forming parts by way of forming processes, wherein a representation of a manufacturing process is produced, which representation comprises a set of machining steps and geometric parameters of these machining steps for manufacturing a part,
wherein the method comprises the following steps:

• determining a set of geometry features (11, 12, 13, 14, 15) of a part (10) in a geometry model of the part (10), wherein each of the geometry features (11, 12, 13, 14, 15) is described by way of a feature type and by way of geometric parameters for describing the geometric shape of the geometry feature (11, 12, 13, 14, 15);
• determining an associated method standard for each of the geometry features (11, 12, 13, 14, 15), wherein a method standard describes one variant for manufacturing the respective geometry feature (11, 12, 13, 14, 15), and the selection of the method standards which may be associated with a certain geometry feature (11, 12, 13, 14, 15) is dependent on the feature type of the geometry feature (11, 12, 13, 14, 15), and wherein a method standard comprises at least one module, and a module represents and describes a machining unit, wherein a machining unit may be executed within a forming operation;
• determining components for each of the modules of the method standards, wherein these components describe the parts of tools which are required for realising the module;
• determining component parameters from the geometric parameters of the geometry features (11, 12, 13, 14, 15) described by the feature types, wherein the component parameters comprise geometric parameters of the components or of the respective tools.

**2.** The method according to claim 1, comprising the following step for determining an associated method standard, for each of the geometry features (11, 12, 13, 14, 15):

• selecting a method standard from a list which associates an ordered sequence of alternative method standards with each type of geometry feature.

**3.** The method according to claim 1 or 2, comprising the following step for determining one or several associated modules, for each of the method standards:

• selecting the module or modules from a list which associates a module or a sequence of modules with each method standard.

**4.** The method according to one of the preceding claims, comprising the following step for determining module components, for each of the modules:

• selecting one or more module components from a list which associates one or more module components with each module.

**5.** The method according to one of the preceding claims, comprising the following step for determining specific component parameters from the geometric parameters of the associated geometry features:

• determining component features from a table, which associates in each case component features with the geometry features (11, 12, 13, 14, 15), in dependence on the feature type, and in each case comprises a rule for determining the component parameters from the geometric parameters of the geometry feature.

**6.** The method according to one of the preceding claims, wherein the step of determining a set of geometry features (11, 12, 13, 14, 15) of a part (10) of a part is done automatically by extraction from the geometry model of the part.

**7.** The method according to one of the preceding claims, comprising the further step:

• determining a method plan, wherein a method plan comprises an ordered sequence of machining steps and further comprises the geometric parameters of tools of these machining steps, by way of associating each of the modules with an operation, whilst taking into account constraints which limit the association in each case of a module, in dependence on the associations of other modules to respective operations.

8. The method according to claim 7, wherein the constraints are of at least one of the following group of categories:

   • a standard set of general rules which need to be complied with at all events;
   • special rules which are automatically activated on use of an associated particular method standard;
   • context-dependent rules, which are automatically generated by way of analysis of geometric relations between components; or
   • manually settable rules.

9. A method according to one of the preceding claims, comprising the further steps of:

   • determining, for each of the components, the component costs from the component parameters, wherein the component costs represent a resource consumption for the respective component or the respective tools;
   • determining total costs as a sum of the component costs.

10. The method according to claim 9 in dependence on claim 7 or 8, comprising the steps for determining a cost-optimal method plan by:

   • determining a method plan;
   • determining the component costs and determining total costs as a sum of component costs for this method plan;
   • modifying parameters of the method plan and newly computing the total costs by way of an optimisation method, wherein the modifiable parameters comprise at least one of the group of:

     ◦ associating different part pivot positions with an operation;
     ◦ associating different method standards with a geometry feature (11, 12, 13, 14, 15);
     ◦ associating different variants of a component with a module;
     ◦ associating modules with operations; or
     ◦ grouping together components.

11. The method according to claim 9 or 10, wherein the following steps are implemented for determining component costs from the component parameters:

   • determining a real component, whose parameters minimise a difference to a component that is specifically required, by way of searching through a table with real components and their parameters;
   • computing a resource consumption per component by way of substituting parameters of the real components into one or more consumption functions, and summing the results of these consumption functions, for which defined consumption functions are stored for each component;
   • summing component costs over all applied components.

12. The method according to claim 11, comprises the further steps:

   • acquiring the actual resource consumption per component on manufacturing the components;
   • adapting the consumption functions according to the actual resource consumption.

13. The method according to one of the preceding claims, comprising as a first step:

   • determining at least one pivot position, in which the part (10) is to be manufactured.

14. A data processing system for the computer-aided generation of tool parameters for tools for manufacturing sheet-metal forming parts by way of forming processes, wherein the data processing system comprises means for carrying out the method according to one or more of the claims 1 to 13.

15. A computer program for computer-aided generation of tool parameters for tools for manufacturing sheet-metal forming parts by way of forming processes, which is loadable and executable on a data processing unit, and which when executed carries out the method according to one or more of the claims 1 to 13.

**16.** A data carrier, comprising a computer program according to claim 15.

## Revendications

**1.** Procédé pour produire à l'aide d'un ordinateur des paramètres d'outils de fabrication de pièces en tôle façonnées par des opérations de façonnage, dans lequel est formée une représentation d'une opération de fabrication qui contient un jeu d'étapes de traitement et des paramètres géométriques d'outils de ces étapes de traitement servant à fabriquer un composant,

le procédé comportant les étapes suivantes :

détermination d'un jeu de caractéristiques géométriques (11, 12, 13, 14, 15) du composant (10) dans un modèle géométrique du composant (10), chacune des caractéristiques géométriques (11, 12, 13, 14, 15) étant décrite par un type de caractéristiques et par des paramètres géométriques qui décrivent la forme géométrique de la caractéristique géométrique (11, 12, 13, 14, 15),
détermination d'une norme méthodologique associée à chacune des caractéristiques géométriques (11, 12, 13, 14, 15), une norme méthodologique décrivant une variante de fabrication de la caractéristique géométrique (11, 12, 13, 14, 15) concernée, la sélection de normes méthodologiques qui peuvent être associées à une caractéristique géométrique (11, 12, 13, 14, 15) définie dépendant du type des caractéristiques géométriques (11, 12, 13, 14, 15), une norme méthodologique présentant au moins un module et un module représentant et décrivant une unité de traitement, une unité de traitement pouvant être exécutée à l'intérieur d'une opération de façonnage,
détermination de composants de chacun des modules des normes méthodologiques, ces composants décrivant les parties des outils nécessaires pour réaliser le module et
détermination de paramètres de composants parmi les paramètres géométriques des caractéristiques géométriques (11, 12, 13, 14, 15) décrites par les types de caractéristiques, les paramètres de composants présentant les paramètres géométriques des composants et des outils correspondants.

**2.** Procédé selon la revendication 1, dans lequel pour déterminer une norme méthodologique associée à chacune des caractéristiques géométriques (11, 12, 13, 14, 15), l'étape suivante est exécutée :

sélection d'une norme méthodologique dans une liste qui associe à chaque type de caractéristique géométrique une succession ordonnée de variantes de normes méthodologiques.

**3.** Procédé selon les revendications 1 ou 2, dans lequel pour déterminer un ou plusieurs modules associés à chacune des normes méthodologiques, l'étape suivante est exécutée :

sélection du ou des modules dans une liste qui associe un module ou une succession de modules à chaque norme méthodologique.

**4.** Procédé selon l'une des revendications précédentes, dans lequel pour déterminer des composants de chacun des modules, l'étape suivante est exécutée :

sélection d'un ou plusieurs composants de module dans une liste qui associe un ou plusieurs composants de module à chaque module.

**5.** Procédé selon l'une des revendications précédentes, dans lequel pour déterminer des paramètres concrets de composants à partir des paramètres géométriques des caractéristiques géométriques associées, l'étape suivante est exécutée :

détermination de caractéristiques de composants dans un tableau qui associe chaque caractéristique de composant aux caractéristiques géométriques (11, 12, 13, 14, 15) en fonction du type de caractéristiques et qui contient chaque fois une prescription de détermination des paramètres de composants parmi les paramètres géométriques de la caractéristique géométrique.

**6.** Procédé selon l'une des revendications précédentes, dans lequel la détermination d'un jeu de caractéristiques géométriques (11, 12, 13, 14, 15) d'un composant est réalisée automatiquement par extraction du modèle géométrique du composant.

**7.** Procédé selon l'une des revendications précédentes, présentant l'étape supplémentaire qui consiste à :

déterminer un plan méthodologique, un plan méthodologique contenant une succession ordonnée d'étapes de traitement et les paramètres géométriques d'outils de ces étapes de traitement par association de chacun des modèles à une opération en tenant compte de conditions qui restreignent l'attribution d'un module en fonction des attributions d'autres modules.

**8.** Procédé selon la revendication 7, dans lequel les conditions sont au moins de l'une des catégories suivantes :

des règles générales qui doivent être respectées en tout cas et qui sont prédéterminées dans la norme,
des règles particulières qui sont activées automatiquement lors de l'utilisation d'une norme méthodologique,
des règles contextuelles qui sont produites automatiquement par analyse de relations géométriques entre des composants ou
des règles qui peuvent être imposées manuellement.

**9.** Procédé selon l'une des revendications précédentes, présentant les étapes supplémentaires qui consistent à :

déterminer pour chacun des composants le coût des composants à partir des paramètres des composants, les coûts de composants représentant une consommation de ressource pour le composant concerné ou les outils concernés et
déterminer le coût total en tant que somme des coûts de composants.

**10.** Procédé selon la revendication 9 dans la mesure où elle est subordonnée aux revendications 7 ou 8 et présentant les étapes suivantes de détermination d'un plan méthodologique optimisé en termes de coûts :

détermination d'un plan méthodologique,
détermination des coûts de composants et détermination des coûts totaux en tant que somme des coûts de composants pour ce plan méthodologique,
modification de paramètres du plan méthodologique et nouveau calcul du coût total par un procédé d'optimisation, les paramètres modifiables comprenant au moins l'un des suivants :

attribution des différentes positions de pivotement des composants à une opération,
attribution de différentes normes méthodologiques à l'une des caractéristiques géométriques (11, 12, 13, 14, 15),
attribution de différentes variantes d'un composant à un module,
attribution de modules à des opérations et
rassemblement de composants.

**11.** Procédé selon les revendications 9 ou 10, dans lequel les étapes suivantes sont exécutées pour déterminer les coûts de composants à partir des paramètres de composants :

détermination d'un composant réel dont les paramètres minimisent une différence par rapport à des composants concrètement nécessaires, par recherche dans un tableau contenant des composants réels et leurs paramètres,
calcul d'une consommation en ressources par composant, par insertion de paramètres des composants réels dans une ou plusieurs fonctions de consommation et addition des résultats de ces fonctions de consommation, des fonctions prédéterminées de consommation étant conservées en mémoire pour chaque composant et addition des coûts de tous les composants utilisés.

**12.** Procédé selon la revendication 11, présentant les étapes supplémentaires qui consistent à :

saisir la consommation effective en ressources par composant lors de la fabrication des composants et
adapter les fonctions de consommation à l'aide de la consommation effective en ressources.

**13.** Procédé selon l'une des revendications précédentes, présentant comme première étape :

la détermination d'au moins une position d'inclinaison dans laquelle le composant (10) sera fabriqué.

**14.** Système de traitement de données permettant de produire à l'aide d'un ordinateur des paramètres d'outils de fabrication de pièces en tôle façonnée par des opérations de façonnage, le système de traitement de données présentant des moyens permettant d'exécuter le procédé selon l'une ou plusieurs des revendications 1 à 13.

15. Programme informatique permettant de produire à l'aide d'un ordinateur des paramètres d'outils de fabrication de pièces en tôle façonnée par des opérations de façonnage, qui peut être chargé et exécuté sur une unité de traitement de données et qui, lorsqu'il est exécuté, met en oeuvre le procédé selon l'une ou plusieurs des revendications 1 à 13.

16. Support de données contenant un programme informatique selon la revendication 15.

**Fig. 1**

**Fig. 2**

Bauteil

1

Feature 1    Feature 2    Feature 3    ...

2

Methoden-      Methoden-      Methodenstandard A     standard B     standard C

3

Modul A1  Modul A2    Modul B1  Modul B2    Modul B3    Modul C1

4

...    ...    Modul-          Modul-          Modul-              Modul-          Modul-
            Komponente x    Komponente y    Komponente z    ...    Komponente z    Komponente x

5

Werkzeug-        Werkzeug-        Werkzeug-        Werkzeug-        Werkzeug-
Komponente x1    Komponente y1    Komponente y2    Komponente z1    Komponente x2

6

Fertigungs-  ...  Fertigungs-    Material 1    ...    Material m
schritt 1         schritt n

7

...    Verbrauchsfunktion              ...    Verbrauchsfunktion
       f(P1(Komp.2a), P2(Komp. 2a), ...)        g(P1(Komp.2a), P2(Komp. 2a), ...)

**Fig. 3**

| Featuretyp | Methodenstandards |
|---|---|
| RUNDLOCH | lochen |
| LANGLOCH | lochen |
| RECHTECKLOCH | lochen |
| LOCH SPEZIAL | lochen |
| RUNDLOCH NICHT Z | lochen mit Schieber |
| LANGLOCH NICHT Z | lochen mit Schieber |
| RECHTECKLOCH NICHT Z | lochen mit Schieber |
| LOCH SPEZIAL NICHT Z | lochen mit Schieber |
| GROSSER DURCHBRUCH | vorschneiden, ziehen, segmentiert schneiden, nachformen |
|  | vorschneiden, ziehen, segmentiert schneiden, abkanten, nachformen |
|  | vorschneiden, ziehen, schneiden, nachformen |
|  | vorschneiden, ziehen, nachformen |
|  | vorschneiden, ziehen |
| DURCHBRUCH | schneiden |
| DURCHBRUCH NICHT Z | schneiden mit Schieber |
| DURCHSTELLUNG RUND | lochen, durchstellen |
| DURCHSTELLUNG LANGLOCH | lochen, durchstellen |
| DURCHSTELLUNG RECHTECK | lochen, durchstellen |
| DURCHSTELLUNG SPEZIAL | lochen, durchstellen |
| DURCHSTELLUNG RUND NICHT Z | lochen mit Schieber, durchstellen mit Schieber |
|  | lochen aus Z, durchstellen mit Schieber |
|  | lochen aus Z, durchstellen aus Z |
| DURCHSTELLUNG LANGLOCH NICHT Z | lochen mit Schieber, durchstellen mit Schieber |
|  | lochen aus Z, durchstellen mit Schieber |
|  | lochen aus Z, durchstellen aus Z |
| DURCHSTELLUNG RECHTECK NICHT Z | lochen mit Schieber, durchstellen mit Schieber |
|  | lochen aus Z, durchstellen mit Schieber |
|  | lochen aus Z, durchstellen aus Z |
| DURCHSTELLUNG SPEZIAL NICHT Z | lochen mit Schieber, durchstellen mit Schieber |
|  | lochen aus Z, durchstellen mit Schieber |
|  | lochen aus Z, durchstellen aus Z |
| GROSSE DURCHSTELLUNG | schneiden, durchstellen |
| GROSSE DURCHSTELLUNG NICHT Z | schneiden mit Schieber, durchstellen mit Schieber |
|  | schneiden aus Z, durchstellen mit Schieber |
| EINFACHFLANSCH | abkanten |
|  | abkanten, schneiden mit Schieber |
|  | nachformen, schneiden mit Schieber |
|  | abkanten, nachformen mit FS |
|  | abkanten, nachformen mit FS, schneiden mit Schieber |

**Fig. 4**

**Fig. 5**

| Featuretyp | Modul | Komponententyp 1 | Komponententyp 2 | Komponententyp 3 | Komp |
|---|---|---|---|---|---|
| RUNDLOCH | lochen | Schneidstempel | Stempelhalteplatte Schneideinheit | Druckplatte Schneideinheit | Abst |
| LANGLOCH | lochen | Schneidstempel | Stempelhalteplatte Schneideinheit | Druckplatte Schneideinheit | Abst |
| RECHTECKLOCH | lochen | Schneidstempel | Stempelhalteplatte Schneideinheit | Druckplatte Schneideinheit | Abst |
| LOCH SPEZIAL | lochen | Schneidstempel | Stempelhalteplatte Schneideinheit | Druckplatte Schneideinheit | Abst |
| RUNDLOCH NICHT Z | lochen mit Schieber | Schneidstempel | Stempelhalteplatte Schneideinheit | Druckplatte Schneideinheit | Abst |
| LANGLOCH NICHT Z | lochen mit Schieber | Schneidstempel | Stempelhalteplatte Schneideinheit | Druckplatte Schneideinheit | Abst |
| RECHTECKLOCH NICHT Z | lochen mit Schieber | Schneidstempel | Stempelhalteplatte Schneideinheit | Druckplatte Schneideinheit | Abst |
| LOCH SPEZIAL NICHT Z | lochen mit Schieber | Schneidstempel | Stempelhalteplatte Schneideinheit | Druckplatte Schneideinheit | Abst |
| GROSSER DURCHBRUCH | vorschneiden | Schneidmesser | Schneidmesser |  |  |
|  | ziehen | Innenliegender Blechhalter |  |  |  |
|  | schneiden | Schneidmatrize | Stempelhalteplatte Schneideinheit | Schneidstempel | Abst |
|  | Segmente schneiden | Obermesser seg. | Untermesser seg. |  |  |
|  | nachformen | Aktivbacke | Passivbacke |  |  |
|  | abkanten | Aktivbacke | Passivbacke |  |  |
| DURCHBRUCH | schneiden | Schneidmatrize | Stempelhalteplatte Schneideinheit | Schneidstempel | Abst |
| DURCHBRUCH NICHT Z | schneiden mit Schieber | Schneidmatrize | Stempelhalteplatte Schneideinheit | Schneidstempel | Abst |
| DURCHSTELLUNG RUND | lochen | Schneidstempel | Stempelhalteplatte Schneideinheit | Druckplatte Schneideinheit | Abst |
|  | durchstellen | Abkantbacke | Stempelhalteplatte Formeinheit | Druckplatte Formeinheit | Aufn |
| DURCHSTELLUNG LANGLOCH | lochen | Schneidstempel | Stempelhalteplatte Schneideinheit | Druckplatte Schneideinheit | Abst |
|  | durchstellen | Abkantbacke | Stempelhalteplatte Formeinheit | Druckplatte Formeinheit | Aufn |
| DURCHSTELLUNG RECHTECK | lochen | Schneidstempel | Stempelhalteplatte Schneideinheit | Druckplatte Schneideinheit | Abst |
|  | durchstellen | Abkantbacke | Stempelhalteplatte Formeinheit | Druckplatte Formeinheit | Aufn |
| DURCHSTELLUNG SPEZIAL | lochen | Schneidstempel | Stempelhalteplatte Schneideinheit | Druckplatte Schneideinheit | Abst |
|  | durchstellen | Abkantbacke | Stempelhalteplatte Formeinheit | Druckplatte Formeinheit | Aufn |
| DURCHSTELLUNG RUND NICHT Z | lochen aus Z | Schneidstempel | Stempelhalteplatte Schneideinheit | Druckplatte Schneideinheit | Abst |
|  | lochen mit Schieber | Schneidstempel | Stempelhalteplatte Schneideinheit | Druckplatte Schneideinheit | Abst |
|  | durchstellen mit Schieber | Abkantbacke | Stempelhalteplatte Formeinheit | Druckplatte Formeinheit | Aufn |
|  | durchstellen aus Z | Abkantbacke | Stempelhalteplatte Formeinheit | Druckplatte Formeinheit | Aufn |
| DURCHSTELLUNG LANGLOCH NICHT Z | lochen aus Z | Schneidstempel | Stempelhalteplatte Schneideinheit | Druckplatte Schneideinheit | Abst |
|  | lochen mit Schieber | Schneidstempel | Stempelhalteplatte Schneideinheit | Druckplatte Schneideinheit | Abst |
|  | durchstellen mit Schieber | Abkantbacke | Stempelhalteplatte Formeinheit | Druckplatte Formeinheit | Aufn |
|  | durchstellen aus Z | Abkantbacke | Stempelhalteplatte Formeinheit | Druckplatte Formeinheit | Aufn |

51 52 53

| Komponente | Einheit | Typ | Standardwert | Instanzierungsregel | Rundungsregel |
|---|---|---|---|---|---|
| **Lochstempel rund** | | | | | |
| Radius | mm | double | | Radius | AUFRUNDEN |
| Length | mm | double | | (CD_PA_35 + 2*((CD_PA_35*CD_P | NICHT_RUNDEN |
| Material | | string | | HSS | |
| **Lochstempel Rechteck** | | | | | |
| CutLength | mm | double | | Schnittlaenge | RUNDEN |
| CutWidth | mm | double | | Schnittbreite | RUNDEN |
| Length | mm | double | | 80 | |
| Material | | string | | HSS | |
| **Messer** | | | | | |
| Length | mm | double | 350 | Laenge | AUFRUNDEN |
| Width | mm | double | | 75 + ceil(CO_Laenge/225)*25 | AUFRUNDEN |
| Height | mm | double | | 75 + ceil(CO_Laenge/225)*25 | AUFRUNDEN |
| Material | | enum | | M_05 | |
| **Backe** | | | | | |
| Length | mm | double | 350 | Laenge | AUFRUNDEN |
| Width | mm | double | | 75 + ceil(CO_Laenge/225)*25 | AUFRUNDEN |
| Height | mm | double | | 75 + ceil(CO_Laenge/225)*25 | AUFRUNDEN |
| Material | | enum | | M_05 | |

**Fig. 6**

| | | Auswahlgroessen | | | | weitere Infos | |
|---|---|---|---|---|---|---|---|
| | | Radius [mm] | | Gesamtlaeenge [mm] | Material | | |
| Name | Typ | CO_Radius | Abstufung CO_Radius | CO_Length | CO_Material | Eigen-fertigung | Norm |
| Schneidstempel | Lochstempel rund | [0.5, 0.95] | 0.1 | 71; 80 | HWS | nein | DIN 9861 |
| Schneidstempel | Lochstempel rund | [1, 8.4] | 0.1 | 71; 80 | HWS | nein | DIN 9861 |
| Schneidstempel mit | Lochstempel rund | [0.5, 1.4] | 0.1 | 63; 72; 80; 90; 100 | HWS | nein | DIN 9861 |
| Schneidstempel mit | Lochstempel rund | [1.5, 2.9] | 0.1 | 63; 72; 80; 90; 100 | HWS | nein | DIN 9861 |

**Fig. 7**

| | | Bearbeitungsaufwand | | Materialverbrauch | | | | Haerten | | | |
|---|---|---|---|---|---|---|---|---|---|---|---|
| | | Fräsen und Bohren | Endmontage komplett | Halbzeug St 52-3 | C 45 | Zukaufteile | verguelen | durchhaerte | laserh: | induktionsh: | |
| Name | Typ | PS_TL_04 | PS_TL_24 | M_07 | M_08 | M_09 | M_50 | H_01 | H_02 | H_03 | H_04 |
| Schneidstempel | Lochstempel rund | 0.25 0.15 + 0.1*CO_Radius | | | | | 37.12268 + 3.18420 * CO_Radius | | | | |
| Schneidstempel | Lochstempel rund | 0.2 + 0.147 *CO_Radius | 0.2 + 0.1*CO_Radius | | | | 42.19448 + 3.19372 * CO_Radius | | | | |
| Schneidstempel mit | Lochstempel rund | 0.25 0.15 + 0.1*CO_Radius | | | | | 37.12268 + 3.18420 * CO_Radius | | | | |
| Schneidstempel mit | Lochstempel rund | 0.2 + 0.147 *CO_Radius | 0.2 + 0.1*CO_Radius | | | | 42.19448 + 3.19372 * CO_Radius | | | | |

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005103850 A